(19) Europäisches Patentamt
European Patent Office
Office européen des brevets

(11) EP 4 269 381 A1

(12) # EUROPEAN PATENT APPLICATION

published in accordance with Art. 153(4) EPC

(43) Date of publication:
**01.11.2023 Bulletin 2023/44**

(21) Application number: **21910653.1**

(22) Date of filing: **17.12.2021**

(51) International Patent Classification (IPC):
***C07C 43/12*** *(2006.01)* ***C08G 65/34*** *(2006.01)*

(52) Cooperative Patent Classification (CPC):
**C07C 43/12; C08G 65/34**

(86) International application number:
**PCT/JP2021/046847**

(87) International publication number:
**WO 2022/138508 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2020 JP 2020217940**

(71) Applicant: **AGC INC.**
**Chiyoda-ku,**
**Tokyo 1008405 (JP)**

(72) Inventors:
- **AOYAMA, Motoshi**
  **Tokyo 100-8405 (JP)**
- **KATSUKI, Naoki**
  **Tokyo 100-8405 (JP)**
- **MATSUURA, Keigo**
  **Tokyo 100-8405 (JP)**
- **UNO, Makoto**
  **Tokyo 100-8405 (JP)**

(74) Representative: **Müller-Boré & Partner Patentanwälte PartG mbB**
**Friedenheimer Brücke 21**
**80639 München (DE)**

(54) **FLUORINE-CONTAINING POLYETHER COMPOUND**

(57) Provided is a fluorine-containing polyether compound including a unit of Formula (1) or (2); in which $R^1$ represents a fluorine atom or the like; $R^2$ and $R^3$ represent a divalent hydrocarbon group having from 3 to 20 carbon atoms which contains a ring structure; at least one of $R^2$ or $R^3$ represents a hydrocarbon group in which a hydrogen atom is replaced by a fluorine atom; $R^4$ and $R^6$ represent a divalent hydrocarbon group having from 3 to 20 carbon atoms which contains a ring structure; $R^5$ represents an alkylene group having from 1 to 16 carbon atoms in which a hydrogen atom may be replaced by a fluorine atom; at least one of $R^4$ or $R^6$ represents a hydrocarbon group in which a hydrogen atom is replaced by a fluorine atom; and $R^4$ and $R^6$ have different structures from each other.

$$[-CF_2-CHR^1-O-R^2-O-CHR^1-CF_2-O-R^3-O-] \ldots \quad (1)$$

$$[-R^5-O-R^4-O-R^5-O-R^6-O-] \ldots \quad (2)$$

EP 4 269 381 A1

## Description

Technical Field

The present disclosure relates to a fluorine-containing polyether compound.

Background Art

Fluorine-containing compounds exhibit excellent lubricating properties, water-repellent and oil-repellent properties, and the like, and thus are used for surface treatment agents, lubricants and the like. Among fluorine-containing compounds, fluorine-containing polyether compounds, which have ether bonds are excellent in the lubricating properties, are used in forming coats for protecting read heads for magnetic discs and the like.
Various methods can be used for producing fluorine-containing polyether compounds. Fluorine-containing polyether compounds in which structural units thereof are randomly distributed in their main chains, or fluorine-containing polyether compounds in which structural units are regularly repeated, can be obtained depending on the methods and the types of materials used for production thereof.
Known examples of methods of producing fluorine-containing polyether compounds having regularly repeated structural units in their main chains include the production methods described in Patent Documents 1 and 2.

PRIOR ART REFERENCES

[PATENT DOCUMENTS]

[Patent Document 1] WO2019/243403
[Patent Document 2] WO2019/243404

SUMMARY OF INVENTION

PROBLEMS TO BE SOLVED BY THE INVENTION

There are cases in which fluorine-containing polyether compounds are required to have chemical resistance when applied to surface treatment agents, lubricants, or the like. However, the chemical resistance of fluorine-containing polyether compounds obtained by the production methods described in Patent Documents 1 and 2 may not have been always sufficient.
The disclosure is made in view of the conventional circumstances as described above, and one aspect of the disclosure aims to provide a fluorine-containing polyether compound having excellent chemical resistance.

MEANS FOR SOLVING THE PROBLEMS

Specific means for solving the problem are as follows.

<1> A fluorine-containing polyether compound comprising a structural unit represented by the following Formula (1) or a structural unit represented by the following Formula (2):

$$[\text{-}CF_2\text{-}CHR^1\text{-}O\text{-}R^2\text{-}O\text{-}CHR^1\text{-}CF_2\text{-}O\text{-}R^3\text{-}O\text{-}]... \qquad (1)$$

$$[\text{-}R^5\text{-}O\text{-}R^4\text{-}O\text{-}R^5\text{-}O\text{-}R^6\text{-}O\text{-}]... \qquad (2)$$

wherein, in Formula (1),

each $R^1$ independently represents a fluorine atom, a hydrogen atom, or a monovalent hydrocarbon group having from 1 to 3 carbon atoms in which a hydrogen atom may be replaced by a fluorine atom, and
each of $R^2$ and $R^3$ independently represents a divalent hydrocarbon group having from 3 to 20 carbon atoms which comprises a ring structure and may comprise an ether bond and in which a hydrogen atom may be replaced by a fluorine atom, provided that at least one of $R^2$ or $R^3$ represents a divalent hydrocarbon group having from 3 to 20 carbon atoms which comprises a ring structure and may comprise an ether bond and in

which a hydrogen atom is replaced by a fluorine atom; and
wherein, in Formula (2),
each of $R^4$ and $R^6$ independently represents a divalent hydrocarbon group having from 3 to 20 carbon atoms which comprises a ring structure and in which a hydrogen atom may be replaced by a fluorine atom, provided that at least one of $R^4$ or $R^6$ represents a divalent hydrocarbon group having from 3 to 20 carbon atoms which comprises a ring structure and in which a hydrogen atom is replaced by a fluorine atom, and $R^4$ and $R^6$ also have different structures from each other, and
each $R^5$ independently represents an alkylene group having from 1 to 16 carbon atoms in which a hydrogen atom may be replaced by a fluorine atom.

<2> The fluorine-containing polyether compound according to <1>, wherein one of $R^2$ or $R^3$ in Formula (1) comprises an aliphatic ring, and another of $R^2$ or $R^3$ comprises an aromatic ring.
<3> The fluorine-containing polyether compound according to <1> or <2>, wherein each of $R^2$ and $R^3$ in Formula (1) comprises a ring structure, and a number of ring members in the ring structure that $R^2$ comprises differs from a number of ring members in the ring structure that $R^3$ comprises.
<4> The fluorine-containing polyether compound according to any one of <1> to <3>, wherein a number of ring structures in one of $R^2$ or $R^3$ in Formula (1) differs from a number of ring structures in another of $R^2$ or $R^3$.
<5> The fluorine-containing polyether compound according to any one of <1> to <4>, wherein $R^3$ in Formula (1) is a group represented by $-CH_2R^{3A}CH_2-$, and wherein $R^{3A}$ represents a group having a structure obtainable by removing two methylene groups that form portions bonding to oxygen atoms, from the divalent hydrocarbon group represented by $R^3$ in Formula (1).
<6> The fluorine-containing polyether compound according to any one of <1> to <5>, wherein each of $R^4$ and $R^6$ in Formula (2) comprises a ring structure, and a number of ring members in the ring structure that $R^4$ comprises differs from a number of ring members in the ring structure that $R^6$ comprises.
<7> A fluorine-containing polyether compound comprising a structural unit represented by the following Formula (1') or a structural unit represented by the following Formula (2'):

$$[-CF_2-CFR^{F1}-O-R^{F2}-O-CFR^{F1}-CF_2-O-R^{F3}-O-]... \quad (1')$$

$$[-R^{F5}-O-R^{F4}-O-R^{F5}-O-R^{F6}-O-]... \quad (2')$$

wherein, in Formula (1'),

each $R^{F1}$ independently represents: a fluorine atom; or a monovalent perfluorohydrocarbon group having from 1 to 3 carbon atoms, and
each of $R^{F2}$ and $R^{F3}$ independently represents a divalent perfluorohydrocarbon group having from 3 to 20 carbon atoms which comprises a ring structure and may comprise an ether bond; and
wherein, in Formula (2'),
each of $R^{F4}$ and $R^{F6}$ independently represents a divalent perfluorohydrocarbon group having from 3 to 20 carbon atoms which comprises a ring structure, provided that $R^{F4}$ and $R^{F6}$ have different structures from each other, and
each $R^{F5}$ independently represents a perfluoroalkylene group having from 1 to 16 carbon atoms.

## EFFECT OF THE INVENTION

According to one aspect of the present disclosure, a fluorine-containing polyether compound with excellent chemical resistance can be provided.

## DESCRIPTION OF EMBODIMENTS

Embodiments for carrying out the disclosure will be described in detail below. However, the disclosure is not limited to the embodiments described below. Unless specifically stated otherwise, the components (including the elementary steps and the like) in the embodiments described below are not necessarily indispensable. The same applies to numerical values and ranges thereof, and the numerical values and ranges do not limit the embodiments of the disclosure.
In the disclosure, a numerical range specified using "(from) ... to ..." represents a range including the numerical values noted before and after "to" as a minimum value and a maximum value, respectively.
In the disclosure, a "fluoroalkylene group" includes a perfluoroalkylene group in which all the hydrogen atoms are replaced by fluorine atoms and a fluoroalkylene group in which some of the hydrogen atoms are replaced by fluorine

atoms. "Fluorocycloalkane" or other description in the disclosure include not only perfluorocycloalkane in which all the hydrogen atoms possessed by cycloalkane are replaced by fluorine atoms, but also cycloalkane in which some of the hydrogen atoms are replaced by fluorine atoms.

In the disclosure, description of groups (atomic groups) written without description whether the groups are substituted or unsubstituted includes those with substituents as well as those without substituents.

In the disclosure, a number of carbon atoms of a group means a total number of carbon atoms contained in the entire of the group. In a case in which a group does not have a substituent, a number of carbon atoms of the group means a number of carbon atoms that form a skeleton of the group. In a case in which a group has a substituent, a number of carbon atoms of the group means a total number which is a sum of a number of carbon atoms forming a skeleton of the group and a number of carbon atoms in the substituent.

In the disclosure, a number average molecular weight (Mn) and a mass average molecular weight (Mw) are measured by gel permeation chromatography (hereinafter also referred to as "GPC"). Measurement by GPC is performed according to the method described in Japanese Patent Application Laid-Open (JP-A) No. 2001-208736 under the following conditions:

- Mobile phase: mixed solvent (R-225: HFIP = 99:1 (volume ratio)) of R-225 (produced by AGC Inc., trade name: ASAHIKLIN® AK-225SEC grade 1) and hexafluoroisopropyl alcohol (HFIP);
- Analytical column: Two PLgel MIXED-E columns (produced by Polymer Laboratories Inc.) connected in series;
- Standard sample for determination of molecular weight: four perfluoropolyethers having a molecular weight distribution (Mw/Mn) of less than 1.1 and Mn of 2,000 to 10,000 and one perfluoropolyether having Mw/Mn of 1.1 or more and Mn of 1,300;
- Flow rate of mobile phase: 1.0 mL/min
- Temperature of columns: 37°C
- Detector: evaporative light scattering detector

<Fluorine-containing Polyether Compound>

The fluorine-containing polyether compound of the disclosure includes a structural unit represented by the following Formula (1) or a structural unit represented by the following Formula (2). Hereinafter, a structural unit represented by Formula (1) may be referred to as a Formula (1) unit, and a structural unit represented by Formula (2) may be referred to as a Formula (2) unit. In addition, a fluorine-containing polyether compound including the Formula (1) unit may be referred to as a first fluorine-containing polyether compound, and a fluorine-containing polyether compound including the Formula (2) unit may be referred to as a second fluorine-containing polyether compound.

$$[\text{-}CF_2\text{-}CHR^1\text{-}O\text{-}R^2\text{-}O\text{-}CHR^1\text{-}CF_2\text{-}O\text{-}R^3\text{-}O\text{-}]... \qquad (1)$$

$$[\text{-}R^5\text{-}O\text{-}R^4\text{-}O\text{-}R^5\text{-}O\text{-}R^6\text{-}O\text{-}]... \qquad (2)$$

In Formula (1), each $R^1$ independently represents a fluorine atom, a hydrogen atom, or a monovalent hydrocarbon group having from 1 to 3 carbon atoms in which a hydrogen atom may be replaced by a fluorine atom, and each of $R^2$ and $R^3$ independently represents a divalent hydrocarbon group having from 3 to 20 carbon atoms which includes a ring structure and may include an ether bond, and in which a hydrogen atom may be replaced by a fluorine atom, provided that at least one of $R^2$ or $R^3$ represents a divalent hydrocarbon group having from 3 to 20 carbon atoms which includes a ring structure and may include an ether bond and in which a hydrogen atom is replaced by a fluorine atom.

In Formula (2), each of $R^4$ and $R^6$ independently represents a divalent hydrocarbon group having from 3 to 20 carbon atoms which includes a ring structure and in which a hydrogen atom may be replaced by a fluorine atom, provided that at least one of $R^4$ or $R^6$ represents a divalent hydrocarbon group having from 3 to 20 carbon atoms which includes a ring structure and in which a hydrogen atom is replaced by a fluorine atom, and $R^4$ and $R^6$ also have different structures from each other, and
each $R^5$ independently represents an alkylene group having from 1 to 16 carbon atoms in which a hydrogen atom may be replaced by a fluorine atom.

In the disclosure, the expression that $R^4$ and $R^6$ "have different structures from each other" means that the numbers of carbon atoms contained in the divalent hydrocarbon groups represented by $R^4$ and $R^6$ are different from each other, or that the divalent hydrocarbon group represented by $R^4$ and $R^6$ have the same number of carbon atoms but different skeletons of hydrocarbon groups constructed by the carbon atoms. It is noted that determination whether the skeletons of hydrocarbon groups are the same or different is made without considering the presence or absence of a carbon-carbon unsaturated bond. For example, a cyclohexylene group and a phenylene group are considered as having the same skeleton.

The fluorine-containing polyether compound of the disclosure may include a structural unit represented by the following Formula (1') or a structural unit represented by the following Formula (2'):

$$[-CF_2-CFR^{F1}-O-R^{F2}-O-CFR^{F1}-CF_2-O-R^{F3}-O-]... \quad (1')$$

$$[-R^{F5}-O-R^{F4}-O-R^{F5}-O-R^{F6}-O-]... \quad (2')$$

wherein, in Formula (1'),

each $R^{F1}$ independently represents a fluorine atom or a monovalent perfluorohydrocarbon group having from 1 to 3 carbon atoms; and
each of $R^{F2}$ and $R^{F3}$ independently represents a divalent perfluorohydrocarbon group having from 3 to 20 carbon atoms which includes a ring structure and may include an ether bond; and
wherein in Formula (2'),
each of $R^{F4}$ and $R^{F6}$ each independently represents a divalent perfluorohydrocarbon group having from 3 to 20 carbon atoms which includes a ring structure, provided that $R^{F4}$ and $R^{F6}$ have different structures from each other; and each $R^{F5}$ independently represents a perfluoroalkylene group having from 1 to 16 carbon atoms.

The groups represented by $R^{F1}$ to $R^{F6}$ may be those having structures in which groups represented by $R^1$ to $R^6$ are perfluorinated. Thus, a fluorine-containing polyether compound including a structural unit represented by Formula (1') or a structural unit represented by Formula (2') may be a perfluorinated product of a first fluorine-containing polyether compound or a second fluorine-containing polyether compound.
The expression that the groups represented by $R^1$ to $R^6$ are "perfluorinated" means that the groups are fluorinated into the following states.
When the groups represented by $R^1$ to $R^6$ do not contain a carbon-carbon unsaturated bond, a state where all hydrogen atoms that bind to carbon atoms which form the groups represented by $R^1$ to $R^6$ and can be replaced by fluorine are replaced by fluorine is referred to as a "perfluorinated" state.
When the groups represented by $R^1$ to $R^6$ contain a carbon-carbon unsaturated bond, a state where all hydrogen atoms that bind to carbon atoms that form the groups represented by $R^1$ to $R^6$ and can be replaced by fluorine are replaced by fluorine and where a fluorine atom is added to each of two carbon atoms forming the carbon-carbon unsaturated bond, such as a carbon-carbon double bond or a carbon-carbon triple bond, to eliminate the carbon-carbon unsaturated bond is referred to as a "perfluorinated" state. For example, a perfluorinated product of >C=C< is >CF-CF<, and a perfluorinated product of -C=C- is $-CF_2-CF_2-$. In addition, a hydrogen atom that can be replaced by fluorine may be bound to an atomic group that can be fluorinated. For example, a perfluorinated product of -CH=CH- is $-CF_2-CF_2-$.
In Formula (1'), when the groups represented by $R^{F1}$ to $R^{F6}$ are those having structures in which groups represented by $R^1$ to $R^6$ are perfluorinated, each $R^{F1}$ independently represents: a fluorine atom when $R^1$ is a fluorine atom; a fluorine atom when $R^1$ is a hydrogen atom; or a monovalent perfluorohydrocarbon group having from 1 to 3 carbon atoms in which a monovalent hydrocarbon group represented by $R^1$ is perfluorinated when $R^1$ is a monovalent hydrocarbon group; and each of $R^{F2}$ and $R^{F3}$ independently represents a divalent perfluorohydrocarbon group having from 3 to 20 carbon atoms in which a divalent hydrocarbon group represented by $R^2$ or $R^3$ is perfluorinated. In Formula (2'), each of $R^{F4}$ and $R^{F6}$ independently represents a divalent perfluorohydrocarbon group having from 3 to 20 carbon atoms in which a divalent hydrocarbon group represented by $R^4$ or $R^6$ is perfluorinated; and each $R^{F5}$ independently represents a perfluoroalkylene group having from 1 to 16 carbon atoms.
When groups represented by $R^{F1}$ to $R^{F6}$ are those having structures in which groups represented by $R^1$ to $R^6$ are perfluorinated, specific examples of the groups represented by $R^{F1}$ to $R^{F6}$ include those described below, which are those having structures in which groups represented by $R^1$ to $R^6$ are perfluorinated.
The fluorine-containing polyether compound of the disclosure exhibits excellent chemical resistance. The reason for this has not been clear, but is assumed as follows.
The fluorine-containing polyether compound of the disclosure includes the Formula (1) unit or the Formula (2) unit, wherein $R^2$ and $R^3$ in the Formula (1) unit and $R^4$ and $R^6$ in the Formula (2) unit are each a hydrocarbon group including a ring structure. Therefore, the fluorine-containing polyether compound contains a plurality of hydrocarbon groups including ring structures in the molecule, so that the fluorine-containing polyether compound is assumed to have improved chemical resistance.
The number average molecular weight (Mn) of the fluorine-containing polyether compound of the disclosure is preferably from 1,000 to 30,000, more preferably from 1,500 to 20,000, and still more preferably from 2,000 to 10,000.
The molecular weight distribution (Mw/Mn) of the fluorine-containing polyether compound of the disclosure is preferably from 1 to 3, more preferably from 1 to 2.5, and still more preferably from 1 to 2.
The fluorine-containing polyether compound of the disclosure may have two chain terminals. When the fluorine-containing polyether compound of the disclosure has two chain terminals, the two chain terminals may be the same or different, but are preferably the same.

Examples of the chain terminal include, but not limited to, a hydroxy group, alkyl groups having from 1 to 16 carbon atoms in which a hydrogen atom may be replaced by a fluorine atom, alkoxy carbonyl groups having from 1 to 16 carbon atoms in which a hydrogen atom may be replaced by a fluorine atom, and alkoxy groups having from 1 to 16 carbon atoms in which a hydrogen atom may be replaced by a fluorine atom.

Description will be made below on the structure of the fluorine-containing polyether compound of the disclosure, as well as materials, production methods and the like for use in production of the fluorine-containing polyether compound of the disclosure.

[First Fluorine-containing Polyether Compound]

One or two or more types of the Formula (1) unit(s) may be included in the first fluorine-containing polyether compound. The first fluorine-containing polyether compound may further include other structural units than the Formula (1) unit.

When the first fluorine-containing polyether compound includes other structural units than the Formula (1) unit, a proportion of the Formula (1) unit with respect to all structural units is preferably 90 mol% or more, more preferably 95 mol% or more, and still more preferably 99 mol% or more. It is particularly preferable that the first fluorine-containing polyether compound does not include any other structural units than the Formula (1) unit.

In Formula (1), it is preferable that at least one $R^1$ is a fluorine atom, and it is more preferable that both $R^1$s are fluorine atoms, from the viewpoint of lubricating properties.

In Formula (1), each of the numbers of carbon atoms of the divalent hydrocarbon groups represented by $R^2$ or $R^3$ is independently preferably 15 or less, and more preferably 13 or less. When each of the numbers of carbon atoms of divalent hydrocarbon groups represented by $R^2$ or $R^3$ is 15 or less, polymerization reactions during the production of a first fluorine-containing polyether compound via the polymerization reactions as described below proceed better, so that a high-molecular weight first fluorine-containing polyether compound can be produced in higher yield.

Each of the numbers of carbon atoms of the divalent hydrocarbon groups represented by $R^2$ or $R^3$ is independently preferably 4 or more, and more preferably 5 or more, from the viewpoint of preventing cyclization reactions during the production of a first fluorine-containing polyether compound via polymerization reactions as described below.

Ring structures contained in divalent hydrocarbon groups represented by $R^2$ or $R^3$ are preferably phenyl rings or cycloalkyl rings.

The divalent hydrocarbon groups represented by $R^2$ or $R^3$ may be groups represented by the following Formula (A):

$$*\text{-}R^b\text{-}O\text{-}R^a\text{-}O\text{-}R^b\text{-}*\ldots \qquad (A)$$

In Formula (A), $R^a$ represents a cycloalkanediyl group, a fluorocycloalkanediyl group, or an arylene group.

Examples of a cycloalkanediyl group and a fluorocycloalkanediyl group represented by $R^a$ include a cyclobutanediyl group, a fluorocyclobutanediyl group, a cyclopentanediyl group, a fluorocyclopentanediyl group, a cyclohexanediyl group, a fluorocyclohexanediyl group, an adamantanediyl group, a fluoroadamantanediyl group, a norbornanediyl group, and a fluoronorbornanediyl group. The cycloalkanediyl, fluorocycloalkanediyl, and arylene groups may have, as a substituent, an alkyl group having from 1 to 3 carbon atoms in which a hydrogen atom may be replaced by a fluorine atom.

In Formula (A), each $R^b$ independently represents a divalent hydrocarbon group having from 1 to 10 carbon atoms which may include a ring structure or a branched structure and in which a hydrogen atom may be replaced by a fluorine atom.

Examples of a divalent hydrocarbon group represented by $R^b$ include a methylene group, an ethylene group, a trimethylene group, a tetramethylene group, a fluoromethylene group, a fluoroethylene group, a fluorotrimethylene group, and a fluorotetramethylene group.

It is noted that * in Formula (A) represents a binding portion to an oxygen atom.

The divalent hydrocarbon groups represented by $R^2$ or $R^3$ may be groups represented by any of the following Formulae (B) to (D).

$$*\text{-}R^c\text{-}R^a\text{-}R^c\text{-}*\ldots \qquad (B)$$

$$*\text{-}R^a\text{-}R^c\text{-}R^a\text{-}*\ldots \qquad (C)$$

$$*\text{-}R^b\text{-}R^d\text{-}R^b\text{-}*\ldots \qquad (D)$$

The groups represented by $R^a$ in Formulae (B) and (C) are the same as in Formula (A).

The groups represented by $R^b$ in Formula (D) are the same as in Formula (A).

In Formulae (B) and (C), each $R^c$ independently represents a single bond, or a divalent hydrocarbon group having from 1 to 10 carbon atoms which may include a ring structure or a branched structure and in which a hydrogen atom may be replaced by a fluorine atom.

Examples of a divalent hydrocarbon group represented by $R^c$ include a methylene group, an ethylene group, a trimethylene group, a propylidene group, an isopropylidene group, a fluoromethylene group, a fluoroethylene group, a fluorotrimethylene group, a fluoropropylidene group, and a fluoroisopropylidene group.

In Formula (D), $R^d$ represents a cycloalkane-1,1-diyl group having from 3 to 6 carbon atoms.

It is noted that * in Formulae (B) to (D) represents a binding portion to an oxygen atom.

In Formula (1), a divalent hydrocarbon group represented by $R^3$ may be a divalent hydrocarbon group represented by "$-CH_2R^{3A}CH_2-$", in which the portions in the divalent hydrocarbon group represented by $R^3$ that are bound to oxygen atoms are methylene groups. Hereinafter, a divalent hydrocarbon group represented by "$-CH_2R^{3A}CH_2-$" may be referred to as a "$-CH_2R^{3A}CH_2-$" group. $R^{3A}$ in a "$-CH_2R^{3A}CH_2-$" group represents a group having a structure obtainable by removing two methylene groups that form portions bonding to oxygen atoms, from the divalent hydrocarbon group represented by $R^3$. Specific examples of the "$-CH_2R^{3A}CH_2-$" group include groups of the specific examples of $R^3$ in which the binding portions to oxygen atoms are methylene groups.

A combination of the divalent hydrocarbon group represented by $R^2$ and the divalent hydrocarbon group represented by $R^3$ in Formula (1) is not particularly limited.

In some embodiments, one of $R^2$ or $R^3$ in Formula (1) may include an aliphatic ring, and another of $R^2$ or $R^3$ may include an aromatic ring.

In some embodiments, both $R^2$ and $R^3$ in Formula (1) may include aliphatic rings.

In some embodiments, each of $R^2$ and $R^3$ in Formula (1) may include a ring structure, and a number of ring members in the ring structure which $R^2$ includes may differ from a number of ring members in the ring structure which $R^3$ includes.

In some embodiments, a number of ring structures in one of $R^2$ or $R^3$ in Formula (1) may differ from a number of ring structures in another of $R^2$ or $R^3$.

In some embodiments, both $R^2$ and $R^3$ in Formula (1) may be divalent hydrocarbon groups including an ether bond, one of $R^2$ or $R^3$ may be a divalent hydrocarbon group including an ether bond and another may be a divalent hydrocarbon group including no ether bond, or both $R^2$ and $R^3$ may be divalent hydrocarbon groups including no ether bond.

Examples of a divalent hydrocarbon group represented by Formula (A) include, but not limited to: the following groups; or groups which have structures in which the following groups are perfluorinated.

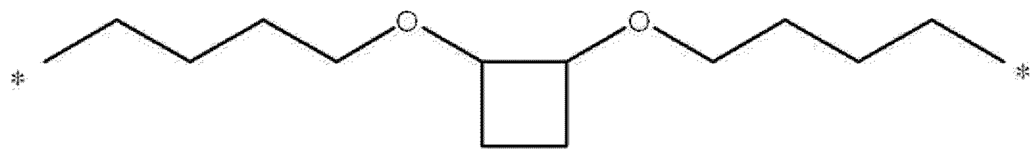

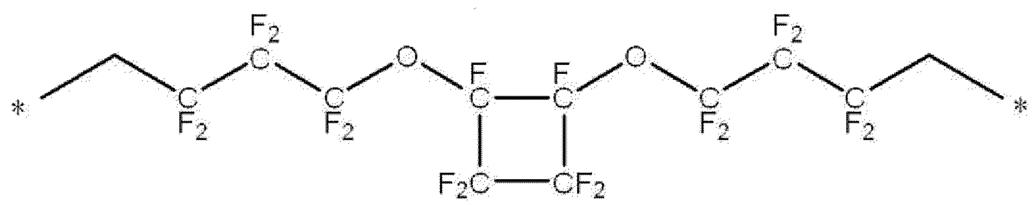

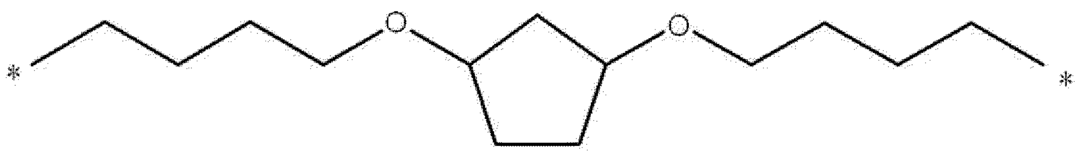

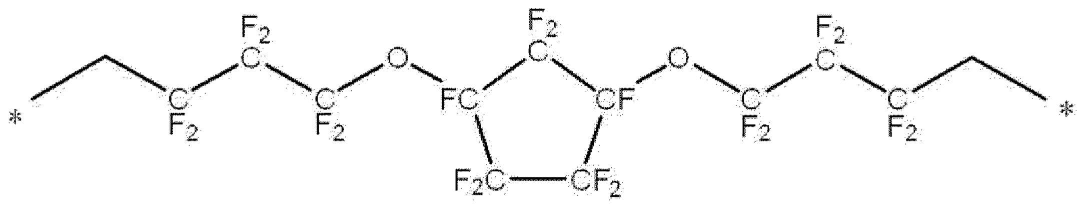

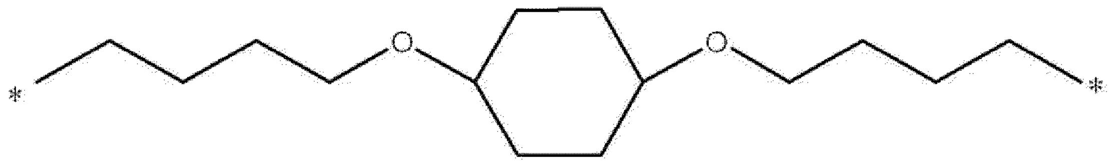

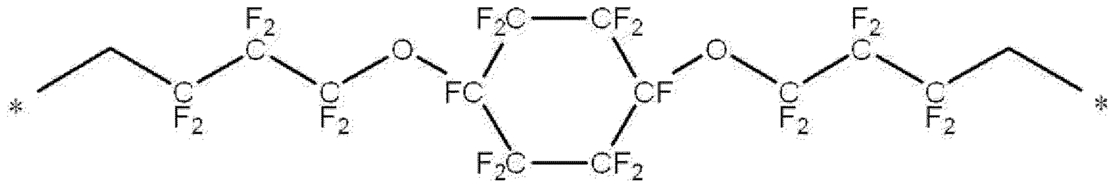

Examples of a group that satisfies any of Formulae (B) to (D) include, but not limited to: the following groups; or groups which have structures in which the following groups are perfluorinated.

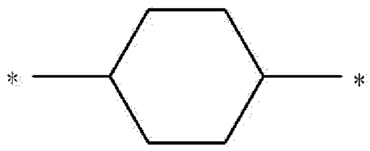

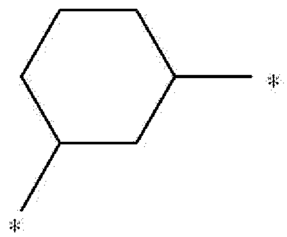

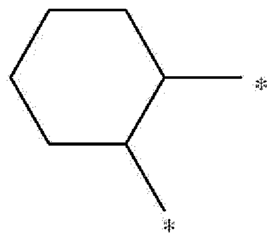

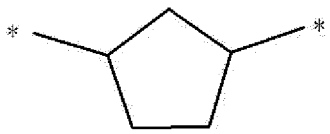

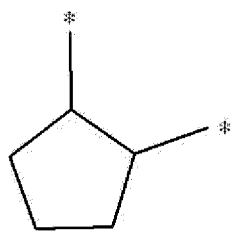

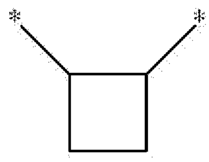

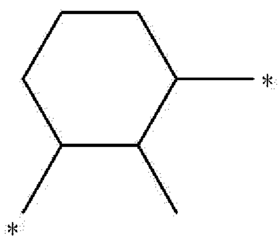

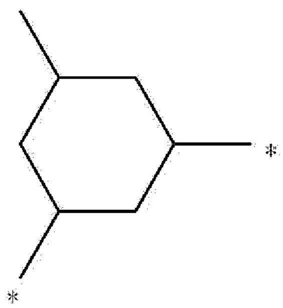

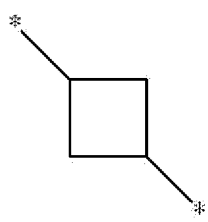

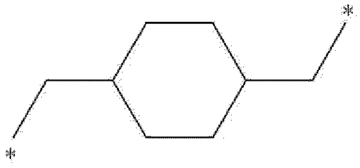
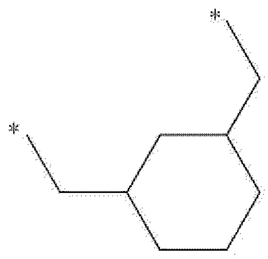
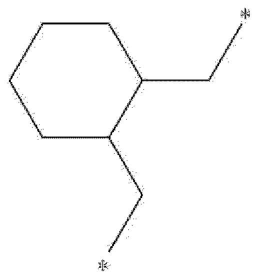

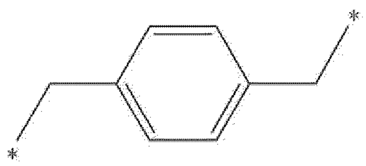
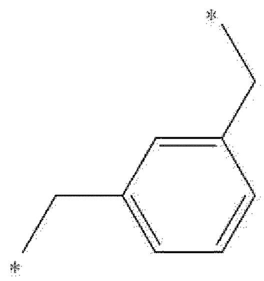
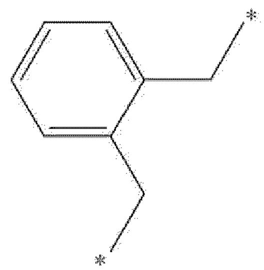

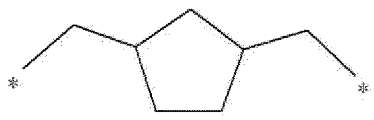
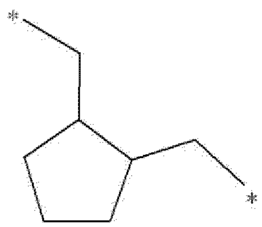
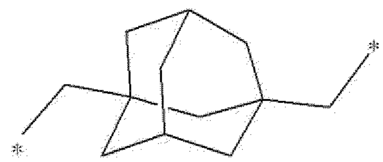

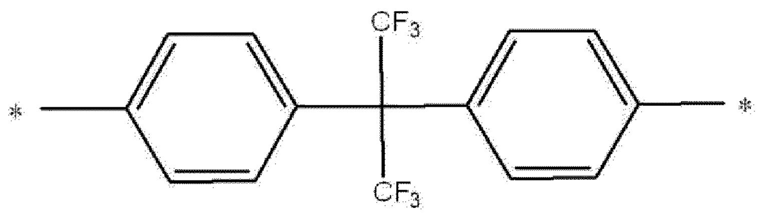

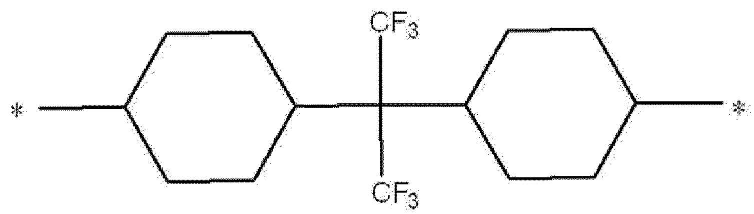

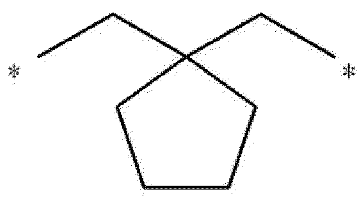
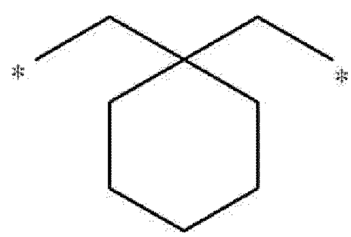

A combination of $R^2$ and $R^3$ may be, for example: a combination of the following groups; or a combination of groups which have structures in which the following groups are perfluorinated.

| $R^2$ | $R^3$ |
|---|---|
| 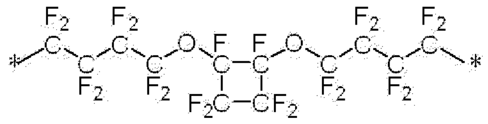 | 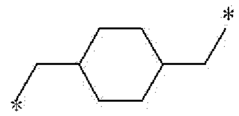 |
| 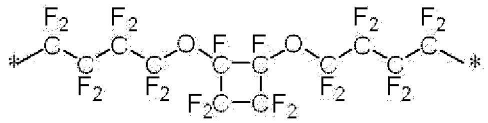 | 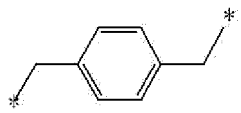 |
| 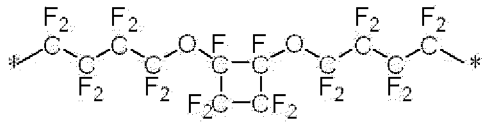 | 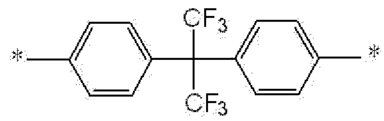 |
| 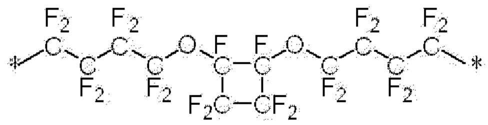 | 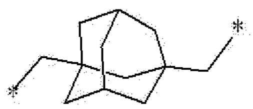 |
| 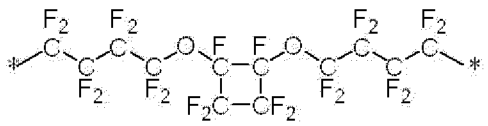 | 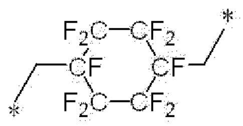 |
| 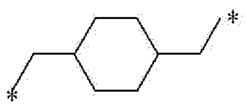 | 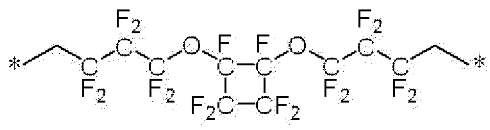 |
| 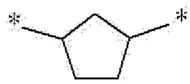 | 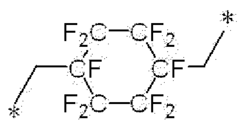 |

(Method of Producing First Fluorine-containing Polyether Compound)

The first fluorine-containing polyether compound may be produced by any method. The first fluorine-containing polyether compound may be obtained, for example, by performing a polymerization reaction between a fluorine-containing divinyl ether compound represented by the following Formula (3) and a diol compound represented by the following Formula (4) at predetermined ratio, and modifying, if necessary, chain terminals. Hereinafter, a fluorine-containing divinyl ether compound represented by Formula (3) may be referred to as a specific divinyl ether compound, and a diol compound represented by Formula (4) may be referred to as a specific diol compound.

$$CF_2=CR^1\text{-}O\text{-}R^2\text{-}O\text{-}CR^1=CF_2... \qquad (3)$$

$$HO\text{-}R^3\text{-}OH... \qquad (4)$$

In Formula (3), $R^1$ and $R^2$ are the same as $R^1$ and $R^2$ in Formula (1), and specific examples thereof, etc. are also the same as those in Formula (1).

In Formula (4), $R^3$ is the same as $R^3$ in Formula (1), and specific examples thereof, etc. are also the same as those in Formula (1).

The specific diol compound may be a diol compound represented by the following Formula (4').

$$HO\text{-}CH_2R^{3A}CH_2\text{-}OH... \quad (4')$$

In Formula (4'), $R^{3A}$ is the same as $R^{3A}$ in Formula (1), and specific examples thereof, etc. are also the same as those in Formula (1). When the specific diol compound is a diol compound represented by Formula (4'), hydroxy groups are bound to methylene groups, so that difference in reactivity depending on the type of the substituent is unlikely to occur as compared with a diol compound having phenolic hydroxy groups. Further, it has the advantages of easiness in expanding substrate applicability and increasing molecular weight.

The reaction between the specific divinyl ether compound and the specific diol compound may be carried out in a solvent, or in a solvent-free state without use of a solvent.

When the reaction between the specific divinyl ether compound and the specific diol compound is carried out in a solvent, the solvent is preferably acetonitrile, bis(2-methoxyethyl) ether (Diglyme), triethylene glycol dimethyl ether (Triglyme), tetraethylene glycol dimethyl ether (Tetraglyme), or a fluorine-containing organic solvent. Examples of the fluorine-containing organic solvent include fluorinated alkanes, fluorinated aromatic compounds, and fluoroalkyl ethers.

A ratio of the specific divinyl ether compound and the specific diol compound is preferably adjusted based on the molecular weight of the aimed first fluorine-containing polyether compound. For example, an amount of the specific diol compound relative to 1 mol of the specific divinyl ether compound is preferably from 0.01 mol to 100 mol, and more preferably from 0.1 mol to 10 mol.

The reaction between the specific divinyl ether compound and the specific diol compound is preferably carried out in the presence of an alkaline catalyst. When the reaction between the specific divinyl ether compound and the specific diol compound is carried out in the presence of an alkaline catalyst, the molecular weight and yield of the first fluorine-containing polyether compound to be produced can be increased.

Examples of the alkaline catalyst include NaOH, KOH, $Na_2CO_3$, CsF, and $K_2CO_3$, and NaOH is preferable from the viewpoint of the molecular weight and yield of the first fluorine-containing polyether compound.

A reaction temperature of the specific divinyl ether compound and the specific diol compound is preferably from 80°C to 160°C, and more preferably from 90°C to 140°C from the viewpoint of the molecular weight and yield of the first fluorine-containing polyether compound.

A reaction time of the specific divinyl ether compound and the specific diol compound is preferably from 1 hour to 72 hours, and more preferably from 2 hours to 48 hours from the viewpoint of the molecular weight and yield of the first fluorine-containing polyether compound.

The first fluorine-containing polyether compound may be produced in a batch or continuous process, and any known process can be used as appropriate.

When the first fluorine-containing polyether compound is produced in a batch process, for example, a specific diol compound and if necessary a solvent are put in a reactor in advance, and then a specific divinyl ether compound may be directly added to the reactor, or a dilute solution obtained by diluting a specific divinyl ether compound with a solvent may be added.

After a reaction between a specific divinyl ether compound and a specific diol compound, at least one selected from an organic solvent, water, and an aqueous solution for adjustment to appropriate acidity may be added to the reaction solution followed by separation. Then, the organic phase may be concentrated to obtain a first fluorine-containing polyether compound. A crude reaction obtained by concentrating the organic phase may be purified to obtain a first fluorine-containing polyether compound.

The first fluorine-containing polyether compound produced by the method described above may include at least one selected from the group consisting of a compound in which both chain terminals are hydroxy groups, a compound in which both chain terminals are "$-O-CR^1=CF_2$" groups, and a compound in which one of the chain terminals is a hydroxy group and another is a "$-O-CR^1=CF_2$" group, or may be a mixture including at least two selected from the group consisting of these compounds.

Proportions of hydroxy groups and "$-O-CR^1=CF_2$" groups with respect to the total chain terminals in a first fluorine-containing polyether compound produced by the method described above are not particularly limited. For example, the proportion of hydroxy groups with respect of the total chain terminals is preferably from 10 mol% to 90 mol%.

-Perfluorination of First Fluorine-containing Polyether Compound-

A perfluorinated product of the first fluorine-containing polyether compound can be obtained, for example, by esterifying a hydroxy group on a chain terminal of the first fluorine-containing polyether compound with an acid fluoride compound to obtain an acyloxy compound, perfluorinating the acyloxy compound to obtain a perfluoroacyloxy compound, alkoxylating the perfluoroacyloxy compound with an alcohol to obtain an alkoxycarbonyl compound, and reducing the alkoxycarbonyl compound.

When a chain terminal of the first fluorine-containing polyether compound is a "$-O-CR^1=CF_2$" group, the "$-O-CR^1=CF_2$" group is converted to a "$-O-CFR^{F1}CF_3$" group during the step in which the acyloxy compound is perfluorinated.

Here, $R^{F1}$ is as described above.

The acid fluoride compound used in esterification of the hydroxy group may be, for example, an acid fluoride represented by the following Formula (5). Hereinafter, an acid fluoride represented by Formula (5) may be referred to as a specific acid fluoride.

$R^4COF$... (5)

In Formula (5), $R^4$ represents a monovalent hydrocarbon group having from 2 to 20 carbon atoms which may include a ring structure or a branched structure, and may include an ether bond, and in which a hydrogen atom may be replaced by a fluorine atom.

The number of carbon atoms of the monovalent hydrocarbon group represented by $R^4$ is preferably 20 or less, and more preferably 10 or less from the viewpoint of ease of purification. The number of carbon atoms of the monovalent hydrocarbon group represented by $R^4$ is preferably 3 or more, and more preferably 4 or more from the viewpoint of reducing side reactions during perfluorination.

When a hydrogen atom in a monovalent hydrocarbon group represented by $R^4$ is replaced by a fluorine atom, the fluorine atom content is preferably 50 mol% or more, more preferably 75 mol% or more, and still more preferably 100 mol% (perfluorohydrocarbon group). Here, the fluorine atom content means a proportion at which hydrogen atoms contained in the hydrocarbon group are replaced by fluorine atoms.

Specific examples of the specific acid fluoride which can be used in the disclosure include, but are not limited to, the following compounds:

- $CF_3CF_2CF_2$-O-$CF(CF_3)COF$
- $CF_3CF_2CF_2$-O-$CF(CF_3)CF_2$-O-$CF(CF_3)COF$
- $CF_3$-$CF(CF_3)COF$

Esterification of a hydroxy group on a chain terminal of the first fluorine-containing polyether compound may be carried out in a solvent, or in a solvent-free state without use of a solvent. When the hydroxy group is esterified in a solvent, the solvent is preferably a fluorine-containing organic solvent, such as a fluorinated alkane, a fluorinated aromatic compound, or a fluoroalkyl ether.

Esterification of the hydroxy group is preferably carried out in the presence of a catalyst. An yield of the acyloxy compound can be improved by reacting the specific acid fluoride with the hydroxy group in the presence of a catalyst.

Examples of the catalyst include NaF and triethylamine, and NaF is preferable from the viewpoint of simplicity of post-treatment.

When reacting the specific acid fluoride with the hydroxy group, the reaction temperature is preferably from -10°C to 100°C, and more preferably from 0°C to 60°C from the viewpoint of the yield of the acyloxy compound.

When reacting the specific acid fluoride with the hydroxy group, the reaction time of the esterification reaction is preferably from 1 hour to 40 hours, and more preferably from 2 hours to 20 hours from the viewpoint of the yield of the acyloxy compound.

When reacting specific acid fluoride with the hydroxy group, the reaction pressure of the esterification reaction is preferably from the atmospheric pressure to 2 MPa (gauge pressure) from the viewpoint of the yield of the acyloxy compound.

The esterification reaction may be carried out in a batch or continuous process, and any known process can be used as appropriate.

When the esterification reaction is carried out in a batch process, for example, the first fluorine-containing polyether compound may be placed in a reactor, and the specific acid fluoride may be directly added to the reactor.

In the esterification reaction, addition of the specific acid fluoride to the reactor is preferably carried out at a rate at which the internal temperature of the reactor does not exceed 40°C, and more preferably at a rate at which the internal temperature does not exceed 20°C from the viewpoint of reducing the generation of by-products.

Since the esterification reaction produces hydrogen fluoride (HF), a hydrogen fluoride scavenger is preferably

present in the reaction system. Examples of the hydrogen fluoride scavenger include alkali metal fluorides and trialkylamines. The alkali metal fluoride is preferably NaF or KF. In the case without the use of a HF scavenger, it is preferable that the temperature is carried out at a reaction temperature at which HF can be vaporized, and HF is discharged outside the reaction system together with a nitrogen stream. An amount of the HF scavenger used is preferably 1 to 10-times mole relative to that of the specific acid fluoride.

After the esterification reaction, at least one selected from an organic solvent, water, and an aqueous solution for adjustment to appropriate acidity may be added to the reaction solution followed by separation or solid-liquid separation. Then, the organic phase may be concentrated to obtain an acyloxy compound. A crude reaction obtained by concentrating the organic phase may be purified to obtain an acyloxy compound.

The method of perfluorinating the acyloxy compound is not particularly limited, and can be performed by a conventionally known method. For example, the acyloxy compound can be contacted with fluorine gas for perfluorination.

The method of perfluorinating the acyloxy compound may be in a batch or continuous process. The perfluorination reaction is preferably carried out by <Method 1> or <Method 2> described below, and more preferably by <Method 2> in terms of the yield and selectivity of the reaction for the perfluoroacyloxy compound. Fluorine gas may be diluted with inert gas such as nitrogen gas for use in both cases in which the reaction is carried out in batch and continuous processes.

<Method 1>

Method 1 is a method in which an acyloxy compound and a solvent are added to a reactor and started to be stirred, then the reaction is carried out at a predetermined reaction temperature and under a predetermined reaction pressure while fluorine gas diluted with inert gas is continuously supplied to the solvent.

<Method 2>

Method 2 is a method in which a solvent is added to a reactor and stirred, then the reaction is carried out at a predetermined reaction temperature and under a predetermined reaction pressure while fluorine gas diluted with inert gas and an acyloxy compound are supplied continuously at a predetermined molar ratio to the solvent for fluorination.

<Method 3>

Method 3 is a method in which a solvent is continuously introduced to and flowed through a tubular reactor, then fluorine gas diluted with inert gas and a solution in which an acyloxy compound has been dissolved are continuously supplied to the flow of the solvent in the tubular reactor in a ratio that results in a predetermined molar ratio of the fluorine gas and the acyloxy compound and mixed, and thereby the fluorine gas and the acyloxy compound are contacted and reacted in the tubular reactor, and finally a solvent containing the reaction product is taken out of the tubular reactor. In this method, a perfluorination reaction can be performed in a continuous process by circulating the solvent, and taking a reaction product away from the circulating solvent.

Examples of the inert gas include rare gas such as helium gas, neon gas, and argon gas and nitrogen gas, among which preferred are nitrogen gas and helium gas, and more preferred is nitrogen gas in terms of economic advantage. The proportion of the fluorine gas (hereinafter also referred to as "amount of fluorine gas") in 100 vol% of the total of the fluorine gas and the inert gas is preferably from 10 vol% to 60 vol%.

An amount of the fluorine gas used is preferably in a proportion from 1.1 mol to 10 mol, and more preferably in a proportion from 1.2 mol to 5 mol with respect to 1 mol of hydrogen atoms to be replaced by fluorine in the acyloxy compound. When the proportion of the amount of the fluorine gas used is within the numerical ranges described above, the yield of the perfluoroacyloxy compound can be increased.

When the perfluorination of the acyloxy compound is performed in a solvent, the solvent may be replaced with nitrogen in advance in order to reduce an amount of oxygen contained in the solvent.

When the acyloxy compound is introduced to the solvent, the solvent may be replaced with nitrogen and further replaced with fluorine in advance.

In the perfluorination reaction, whether in a batch or continuous process, it is preferable that an amount of fluorine gas for fluorinating hydrogen atoms in the acyloxy compound is always excess relative to all the hydrogen atoms in the acyloxy compound that can be fluorinated. The amount of fluorine gas is preferably 1.1 equivalent or more, and more preferably 1.3 equivalent or more relative to the theoretical amount required to fluorinate all hydrogen atoms that can be fluorinated.

When perfluorination of an acyloxy compound is performed by introducing fluorine gas and the acyloxy compound to a solvent, and when the introduction rate of the acyloxy compound into the solvent on a molar basis is considered as 1, the introduction rate of the fluorine gas on a molar basis may range from 1 to 10 times, or from 2 to 7 times the

rate obtained by multiply the introduction rate of the acyloxy compound on a molar basis by the number of hydrogen atoms which are contained in the acyloxy compound and can be replaced by fluorine atoms of the fluorine gas. When the relation between the introduction rates is within the numerical ranges described above, the yield of the perfluoroacyloxy compound can be increased.

For efficient progress of the fluorination reaction of the acyloxy compound, it is preferable that a C-H bond-containing compound other than the acyloxy compound is added to the solvent, or the solvent is irradiated with ultraviolet ray. These are preferably performed at a later stage of the fluorination reaction. Thus, the acyloxy compound present in the solvent can be efficiently fluorinated to increase the yield of the perfluoroacyloxy compound.

The C-H bond-containing compound is preferably an aromatic hydrocarbon, such as benzene or toluene. An amount of the C-H bond-containing compound added is preferably from 0.1 mol% to 10 mol%, and more preferably from 0.1 mol% to 5 mol% based on hydrogen atoms in the acyloxy compound.

The C-H bond-containing compound is preferably added to the solvent in which fluorine gas is present. Furthermore, when the C-H bond-containing compound is added, the reaction system is preferably pressurized. The reaction pressure during the pressurization is preferably from 0.01 MPa to 5 MPa (gauge pressure).

When the reaction system is irradiated with ultraviolet ray, the irradiation time is preferably from 0.1 hour to 3 hours.

After the fluorination reaction, the inside of the reaction system may be replaced with inert gas such as nitrogen gas and then the organic phase may be concentrated to obtain the perfluoroacyloxy compound. Alternatively, a crude reaction liquid obtained by concentrating the organic phase may be purified to obtain the perfluoroacyloxy compound.

The perfluoroacyloxy compound is alkoxylated with alcohol to obtain an alkoxycarbonyl compound.

The alcohol that is used to act on the perfluoroacyloxy compound is not particularly limited. Examples of the alcohol include methanol, ethanol, and isopropanol.

The reaction between the perfluoroacyloxy compound and alcohol may be carried out in a solvent, or in a solvent-free state without use of a solvent.

When the reaction between the perfluoroacyloxy compound and alcohol is carried out in a solvent, the solvent is preferably a fluorine-containing organic solvent, such as a fluorinated alkane, a fluorinated aromatic compound, or a fluoroalkyl ether.

An amount of alcohol used relative to the perfluoroacyloxy compound is preferably from 2 mol to 20 mol, more preferably from 2.1 mol to 15 mol, and still more preferably from 2.2 mol to 10 mol with respect to 1 mol of the perfluoroacyloxy compound.

The temperature of the reaction between the perfluoroacyloxy compound and alcohol is preferably from -10°C to 60°C, and more preferably from 0°C to 40°C from the viewpoint of the yield of the alkoxycarbonyl compound.

The temperature of the reaction between the perfluoroacyloxy compound and alcohol is preferably from 0.5 hours to 48 hours, and more preferably from 1 hour to 24 hours from the viewpoint of the yield of the alkoxycarbonyl compound.

In the reaction between the perfluoroacyloxy compound and alcohol, addition of alcohol to the perfluoroacyloxy compound is preferably carried out at a rate at which the internal temperature of the reactor does not exceed 40°C, and more preferably at a rate at which the internal temperature does not exceed 20°C from the viewpoint of reducing the generation of by-products.

After the reaction between the perfluoroacyloxy compound and alcohol, at least one selected from an organic solvent, water, and an aqueous solution for adjustment to appropriate acidity may be added to the reaction solution followed by separation or solid-liquid separation. Then, the organic phase may be concentrated to obtain the alkoxycarbonyl compound. Alternatively, a crude reaction obtained by concentrating the organic phase may be purified to obtain the alkoxycarbonyl compound.

A method of reducing the alkoxycarbonyl compound is not particularly limited, and can be performed by a conventionally known method. For example, the alkoxycarbonyl compound can be reduced by using a reducing agent, such as sodium borohydride ($NaBH_4$), cyanosodium borohydride ($NaBH_3CN$), lithium borohydride ($LiBH_4$), lithium aluminum hydride (LAH), or diisobutylaluminium hydride (DIBAL) to act on the alkoxycarbonyl compound in a fluorine-containing organic solvent or alcohol such as methanol or ethanol.

In the reduction reaction of the alkoxycarbonyl compound, the reaction temperature is preferably from -10°C to 80°C, and more preferably from -5°C to 50°C from the viewpoint of the yield of the perfluorinated product.

In the reduction reaction of the alkoxycarbonyl compound, the reaction time is preferably from 0.5 hours to 48 hours, and more preferably from 1 hour to 24 hours from the viewpoint of the yield of the perfluorinated product.

After the reduction reaction, for example, an aqueous solution such as hydrochloric acid may be added to the reaction solution, and the mixture may be separated and washed with water, a saturated salt water, or the like, followed by concentration of the organic phase to obtain the perfluorinated product.

[Second Fluorine-containing Polyether Compound]

One or two or more types of the Formula (2) unit(s) may be contained in the second fluorine-containing polyether compound. The second fluorine-containing polyether compound may further include other structural units than the Formula (2) unit.

When the second fluorine-containing polyether compound includes other structural units than the Formula (2) unit, the proportion of the Formula (2) unit to all structural units is preferably 90 mol% or more, more preferably 95 mol% or more, and still more preferably 99 mol% or more. It is particularly preferable that the second fluorine-containing polyether compound does not include any other structural units than the Formula (2) unit.

In Formula (2), each of the numbers of carbon atoms of the divalent hydrocarbon groups represented by $R^4$ or $R^6$ is independently preferably 15 or less, and more preferably 10 or less. When each of the numbers of carbon atoms of divalent hydrocarbon groups represented by $R^4$ or $R^6$ is 15 or less, polymerization reactions during the production of a second fluorine-containing polyether compound via the polymerization reactions as described below proceed better, so that a high-molecular weight second fluorine-containing polyether compound can be produced in higher yield.

Each of the numbers of carbon atoms of the divalent hydrocarbon groups represented by $R^4$ or $R^6$ is independently preferably 4 or more, and more preferably 5 or more, from the viewpoint of preventing cyclization reactions during the production of a second fluorine-containing polyether compound via polymerization reactions as described below.

Divalent hydrocarbon groups represented by $R^4$ or $R^6$ may be groups represented by any of the above-described Formulae (B) to (D), and specific examples thereof are the same as described above.

In Formula (2), $R^5$ is preferably an alkylene group having from 1 to 10 carbon atoms in which a hydrogen atom may be replaced by a fluorine atom, more preferably an alkylene group having from 2 to 8 carbon atoms, and still more preferably an alkylene group having from 3 to 6 carbon atoms.

Examples of the alkylene group represented by $R^5$ include alkylene groups such as an ethylene group, a trimethylene group, a tetramethylene group, a pentamethylene group, and a hexamethylene group; and fluoroalkylene groups such as a fluoroethylene group, a fluorotrimethylene group, a fluorotetramethylene group, a fluoropentamethylene group, and a fluorohexamethylene group.

A combination of $R^4$ and $R^6$ may be, for example: a combination of the following groups; or a combination of groups which have structures in which the following groups are perfluorinated.

| $R^4$ | $R^6$ |
|---|---|
| 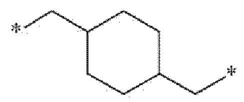 | 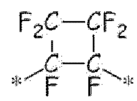 |
| 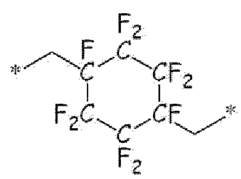 | 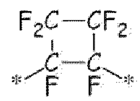 |
| 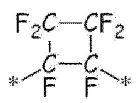 | 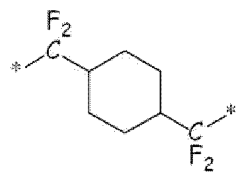 |

(Method of Producing Second Fluorine-containing Polyether Compound)

The second fluorine-containing polyether compound may be produced by any method.

The second fluorine-containing polyether compound can be obtained, for example, by using a diacyl fluoride compound represented by the following Formula (6-1) and a difluoroformate compound represented by the following Formula (7-1) to react at predetermined ratio, and modifying, if necessary, the chain terminals.

Alternatively, the second fluorine-containing polyether compound can be obtained, for example, by using a diacyl fluoride compound represented by the following Formula (6-2) and a difluoroformate compound represented by the following Formula (7-2) to react at predetermined ratio, and modifying, if necessary, the chain terminals.

Hereinafter, a diacyl fluoride compound represented by Formula (6-1) or (6-2) may be referred to as specific diacyl fluoride compound, and a difluoroformate compound represented by Formula (7-1) or (7-2) may be referred to as a specific difluoroformate compound.

$F\text{-}C(=O)\text{-}R^{5A}\text{-}O\text{-}R^4\text{-}O\text{-}R^{5A}\text{-}C(=O)\text{-}F...$ (6-1)

$F\text{-}C(=O)O\text{-}R^6\text{-}OC(=O)\text{-}F...$ (7-1)

$F\text{-}C(=O)\text{-}R^{4A}\text{-}C(=O)\text{-}F...$ (6-2)

$F\text{-}C(=O)O\text{-}R^5\text{-}O\text{-}R^6\text{-}O\text{-}R^5\text{-}OC(=O)\text{-}F...$ (7-2)

In Formula (6-1), (7-1), or (7-2), $R^4$, $R^5$, and $R^6$ are the same as $R^4$, $R^5$, and $R^6$ in Formula (2), and specific examples thereof, etc. are also the same as those in Formula (2).

A diacyl fluoride compound represented by Formula (6-1) and a difluoroformate compound represented by Formula (7-1) can be reacted to produce the second fluorine-containing polyether compound including a structural unit represented by Formula (2A). In Formula (2A), the group represented by "$-R^{5A}CF_2-$" corresponds to $R^5$ in Formula (2). Specific examples of the group represented by "$-R^{5A}CF_2-$" include groups of the specific examples of $R^5$ in which the binding portions to oxygen atoms in contact with $R^6$ are perfluoromethylene groups.

$[\text{-}CF_2R^{5A}\text{-}O\text{-}R^4\text{-}O\text{-}R^{5A}CF_2\text{-}O\text{-}R^6\text{-}O\text{-}]..$ (2A)

A diacyl fluoride compound represented by Formula (6-2) and a difluoroformate compound represented by Formula (7-2) can be reacted to produce a second fluorine-containing polyether compound including a structural unit represented by Formula (2B). In Formula (2B), the group represented by "$-CF_2R^{4A}CF_2-$" corresponds to $R^4$ in Formula (2). Specific examples of the group represented by "$-CF_2R^{4A}CF_2-$" include groups of the specific examples of $R^4$ in which the binding portions to oxygen atoms are perfluoromethylene groups.

$[\text{-}R^5\text{-}O\text{-}CF_2R^{4A}CF_2\text{-}O\text{-}R^5\text{-}O\text{-}R^6\text{-}O\text{-}]..$ (2B)

The reaction between the specific diacyl fluoride compound and the specific difluoroformate compound may be carried out in a solvent, or in a solvent-free state without use of a solvent.

When the reaction between the specific diacyl fluoride compound and the specific difluoroformate compound is carried out in a solvent, the solvent may be a polar aprotic solvent. Specific examples of the polar aprotic solvent include dimethoxyethane (Glyme), Diglyme, Triglyme, Tetraglyme, tetrahydrofuran, acetonitrile, dimethyl sulfoxide, dimethylformamide, and ethylene polyoxide dimethyl ether, and Tetraglyme and acetonitrile are more preferable.

The ratio of the specific diacyl fluoride compound and the specific difluoroformate compound is preferably adjusted based on the molecular weight of the objective second fluorine-containing polyether compound. For example, the amount of the specific difluoroformate compound relative to 1 mol of the specific diacyl fluoride compound is preferably from 0.01 mol to 100 mol, and more preferably from 0.1 mol to 10 mol.

The reaction between the specific difluoroformate compound and the specific diacyl fluoride compound is carried out in the presence of a fluoride source, preferably a metal fluoride. Preferable examples of the metal fluoride include CsF, KF, RbF, AgF, and combinations thereof.

The metal fluoride may be used as powder, or may be supported on carbon, NaF, or $CaF_2$.

The specific difluoroformate compound is obtained, for example, by reacting a corresponding diol compound and carbonyl fluoride by a conventional method.

The reaction between the specific difluoroformate compound and the specific diacyl fluoride compound may be carried out in an autoclave.

For example, the metal fluoride, the specific difluoroformate compound, and the solvent may be placed in an autoclave, exposed to a nitrogen atmosphere and vacuum degassed, followed by addition of the specific diacyl fluoride compound and reaction at a predetermined temperature for a predetermined time to obtain the second fluorine-containing polyether compound.

After reaction between the specific difluoroformate compound and the specific diacyl fluoride compound, the reaction product may be filtered under pressure through a fluorocarbon polymer filter to remove the metal fluoride. In addition, the solvent, and unreacted specific difluoroformate compound and specific diacyl fluoride compound may be removed from the filtrate by distillation or the like to obtain a purified second fluorine-containing polyether compound.

The second fluorine-containing polyether compound produced by the method described above may include at least one selected from the group consisting of a compound in which both chain terminals are acyl fluoride groups, a

compound in which both chain terminals are fluoroformate groups, and a compound in which one of the chain terminals is an acyl fluoride group and the other is a fluoroformate group, or may be a mixture including at least two selected from the group consisting of these compounds.

The proportions of acyl fluoride groups and fluoroformate groups with respect to all chain terminals in the second fluorine-containing polyether compound produced by the method described above are not particularly limited. For example, the proportion of acyl fluoride groups with respect to the all chain terminals is preferably from 10 mol% to 90 mol%.

The fluoroformate group at a chain terminal may be heated to be from 160°C to200°C in the presence of an alkali metal such as NaOH, KOH, $Na_2CO_3$, $K_2CO_3$, CsF, KF, and NaF to cause a decarbonylation reaction to convert it to a fluorinated alkyl group, such as a $CH_2F$ group.

When the fluoroformate group at a chain terminal of the second fluorine-containing polyether compound is converted to a fluorinated alkyl group, the second fluorine-containing polyether compound produced by the method described above may include at least one selected from the group consisting of a compound in which both chain terminals are acyl fluoride groups, a compound in which both chain terminals are fluorinated alkyl groups, and a compound in which one of the chain terminals is an acyl fluoride group and the other is a fluorinated alkyl group, or may be a mixture including at least two selected from the group consisting of these compounds.

The proportions of acyl fluoride groups and fluorinated alkyl groups with respect to all chain terminals in the second fluorine-containing polyether compound produced by the method described above are not particularly limited. For example, the proportion of acyl fluoride groups with respect to the all chain terminals is preferably from 10 mol% to 90 mol%.

The reaction temperature of the specific difluoroformate compound and the specific diacyl fluoride compound is preferably from 80°C to 160°C, and more preferably from 90°C to 140°C from the viewpoint of the molecular weight and yield of the second fluorine-containing polyether compound.

The reaction time of the specific difluoroformate compound and the specific diacyl fluoride compound is preferably from 2 hours to 72 hours, and more preferably from 2 hours to 48 hours from the viewpoint of the molecular weight and yield of the first fluorine-containing polyether compound.

-Perfluorination of Second Fluorine-containing Polyether Compound-

A perfluorinated product of the second fluorine-containing polyether compound can be obtained, for example, by converting the fluoroformate group to a fluorinated alkyl group and using alcohol to act on the remaining acyl fluoride group for esterification to obtain a first alkoxycarbonyl compound, perfluorinating the first alkoxycarbonyl compound to obtain a perfluoroalkoxycarbonyl compound, subjecting the perfluoroalkoxycarbonyl compound to transesterification with alcohol to obtain a second alkoxycarbonyl compound, and reducing the second alkoxycarbonyl compound.

In obtaining the first alkoxycarbonyl compound, the alcohol used to act on the acyl fluoride group is not particularly limited. Examples of the alcohol include methanol, ethanol, and isopropanol.

The alcohol for esterifying the acyl fluoride group may be also used as a solvent in the esterification of the acyl fluoride group. The second fluorine-containing polyether compound is added to the alcohol and heated if necessary to obtain the first alkoxycarbonyl compound.

The reaction temperature of the esterification reaction is preferably from -10°C to 60°C, and more preferably from 0°C to 40°C from the viewpoint of the yield of the first alkoxycarbonyl compound.

The reaction time of the esterification reaction is preferably from 0.5 hours to 48 hours, and more preferably from 1 hour to 24 hours from the viewpoint of the yield of the first alkoxycarbonyl compound.

After the esterification reaction, at least one selected from an organic solvent, water, and an aqueous solution for adjustment to appropriate acidity may be added to the reaction solution followed by separation. Then, the organic phase may be concentrated to obtain the first alkoxycarbonyl compound. Alternatively, a crude reaction obtained by concentrating the organic phase may be purified to obtain the first alkoxycarbonyl compound.

The method of perfluorinating the first alkoxycarbonyl compound is not particularly limited, and a method which is similar to the method of perfluorinating the first fluorine-containing polyether compound can be used to obtain the perfluoroalkoxycarbonyl compound.

The alcohol used in transesterification of the perfluoroalkoxycarbonyl compound is not particularly limited. Examples of the alcohol include methanol, ethanol, and isopropanol.

The alcohol for transesterifying may be also used as a solvent in the transesterification. The perfluoroalkoxycarbonyl compound is added to the alcohol and heated if necessary to obtain the second alkoxycarbonyl compound.

The reaction temperature of the transesterification reaction is preferably from -10°C to 60°C, and more preferably from 0°C to 40°C from the viewpoint of the yield of the second alkoxycarbonyl compound.

The reaction time of the transesterification reaction is preferably from 0.5 hours to 48 hours, and more preferably from 1 hour to 24 hours from the viewpoint of the yield of the second alkoxycarbonyl compound.

After the transesterification reaction, at least one selected from an organic solvent, water, and an aqueous

solution for adjustment to appropriate acidity may be added to the reaction solution followed by separation. Then, the organic phase may be concentrated to obtain the second alkoxycarbonyl compound. A crude reaction obtained by concentrating the organic phase may be purified to obtain the second alkoxycarbonyl compound.

The method of reducing the alkoxycarbonyl compound is not particularly limited. A perfluorinated product can be obtained by using a method which is similar to the method of reducing the first fluorine-containing polyether compound.

EXAMPLES

The embodiments described above will be described in more detail with reference to Examples, which do not limit the embodiments. ** in chemical formulae in Examples represents a binding portion to a carbon atom.

The compounds obtained in Synthesis Examples 1-1 to 6-1 are Examples, and the compound obtained in Synthesis Example 7 is Comparative Example.

[Evaluation Method]

(NMR Analysis)

Structures of compounds were determined by $^1$H-NMR and $^{19}$F-NMR. The NMR analyses were performed under the following conditions.

7.5 ppm nitrobenzene was used as a reference material for $^1$H-NMR (300.4 MHz).
-162.5 ppm perfluorobenzene was used as a reference material for $^{19}$F-NMR (282.7MHz).
CFE-419 ($ClCF_2CFClCF_2OCF_2CF_2Cl$) was used as a solvent for NMR.

(GPC Analysis)

Number average molecular weights (Mn) and mass average molecular weights (Mw) were measured by GPC.

The GPC measurement was performed by the method as described above.

[Synthesis Example 1]

In a 5,000-mL flask, 1,000 g of a compound represented by the following Formula A, 755 g of NaF, and 5,971 g of a compound represented by the following Formula B were mixed and stirred at 50°C for 20 hours. After completing the stirring, the temperature was brought back to 25°C, and the mixture was filtered through a PTFE membrane filter to remove NaF, sodium hydrogen difluoride (NaFHF), etc. The obtained filtrate was concentrated at 60°C under vacuum to obtain 2,059 g of a compound represented by the following Formula C.

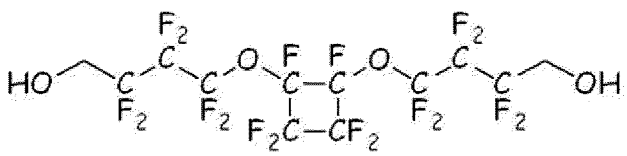
A

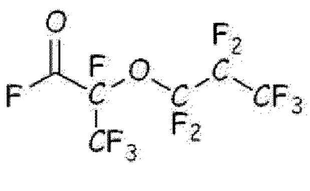
B

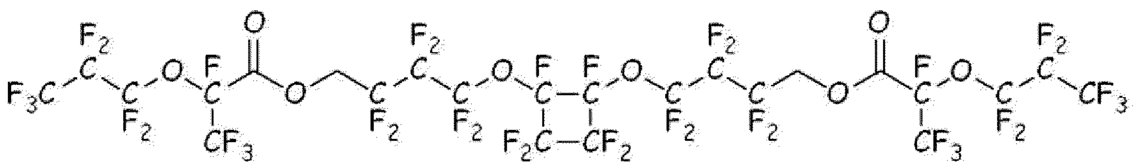
C

To a 3,000-mL nickel autoclave, 2,800 g of CFE-419 was added and stirred while the temperature was kept at

20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 190 L/h for 1 hour. Then, 500 g of the compound represented by Formula C was injected for 2 hours while blowing the 20 vol%- diluted fluorine gas at the same flow rate. Further, the 20-vol%-fluorine gas was blown at the same rate for 1 hour, and then nitrogen gas was further blown for 1 hour.

The reaction solution was collected from the autoclave and concentrated to obtain 504 g of a compound represented by Formula D.

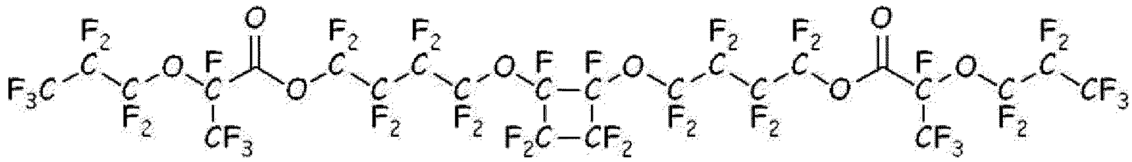

D

To a 1,000-mL flask, 500 g of the compound represented by Formula D, and 2.3 g of KF powder were added and vigorously stirred at 100°C for 5 hours. Distillation was performed with a distillator installed on the top of the flask to obtain 193 g of a fraction. The obtained fraction was analyzed by $^1$H-NMR and $^{19}$F-NMR to determine that the main product was a compound represented by Formula E, that was the target compound.

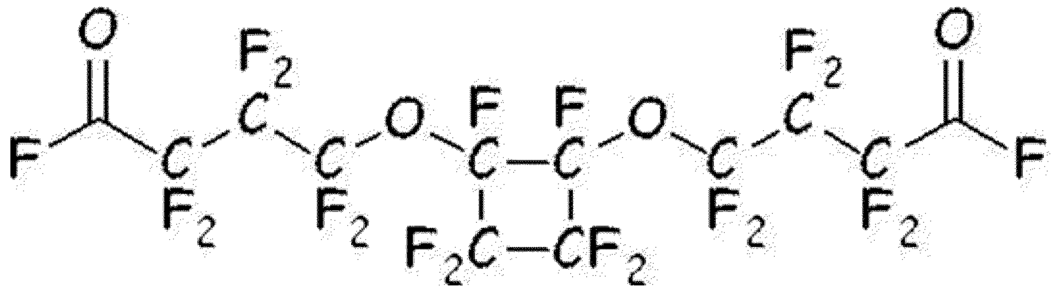

E

To a 2,000-mL autoclave, 190 g of the compound represented by Formula E, 4.9 g of CsF, and 38.0 g of Tetraglyme were added, and 118 g of hexafluoropropylene oxide (HFPO) was added while keeping the mixture at -10°C, which was then reacted at -10°C for 16 hours. After completing the reaction, the organic layer was collected and purified to obtain 178 g of a compound represented by Formula F as a target compound.

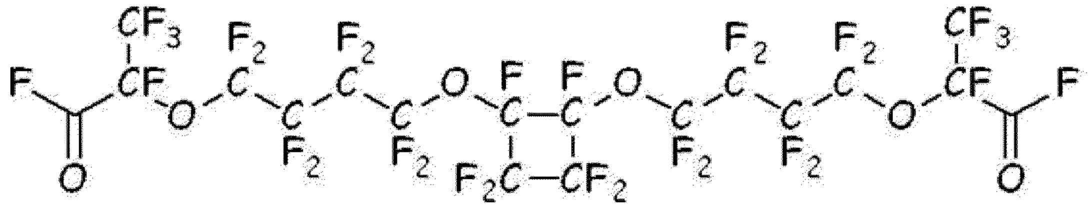

F

An inconel 1-inch reaction tube was filled with glass beads followed by heating to 330°C. The compound represented by Formula F was diluted at 10 vol% with nitrogen gas, and introduced to the reaction tube. The purified gas was cooled and collected at the outlet of the reaction tube, followed by purification by distillation to obtain 87 g of a compound represented by Formula G as a target compound.

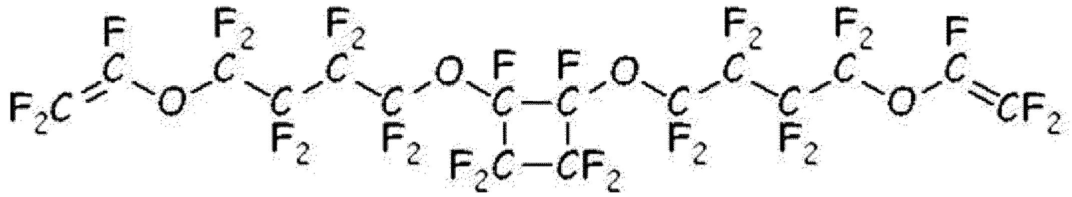

G

[Synthesis Example 1-1]

To a three-neck flask equipped with a stirring blade, a thermometer, and a reflux condenser, 40.0 g of NaOH, 1009 g of acetonitrile, and 144.2 g of 1,4-cyclohexanedimethanol were added, and mixed at 40°C with stirring, and 551.7 g of the compound represented by Formula G was added dropwise. Thereafter, the mixture was heated to 90°C, and the progress of the reaction was monitored by checking with NMR. After determination that the amounts of diol compound and divinyl ether compound remaining in the reaction system were reduced, the reaction was stopped and concentration was performed to remove acetonitrile, and hydrochloric acid was added with stirring. The mixture was separated into two layers, and the organic layer was collected. This was designated as a product 1-1-1. An amount of the collected product 1-1-1, which was liquid, was 867 g.

The molecular weight distribution (Mw/Mn) of the product 1-1-1 was 1.70. The product 1-1-1 contained compounds represented by the following Formulae 1-1-1A, 1-1-1B, and 1-1-1C. The average of the number n was 2. 76 mol% of the terminal functional groups in the entire product 1-1-1 were alcohols, while 24 mol% were vinyl ethers.

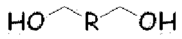 (1-1-1A)

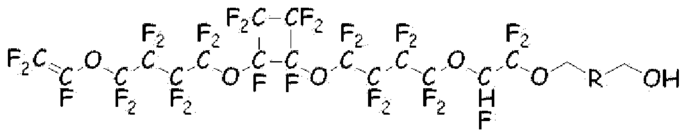 (1-1-1B)

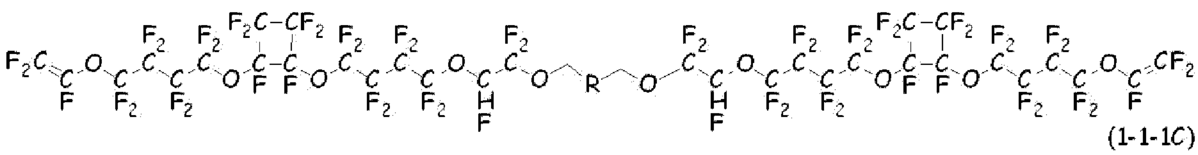

(1-1-1C)

R: 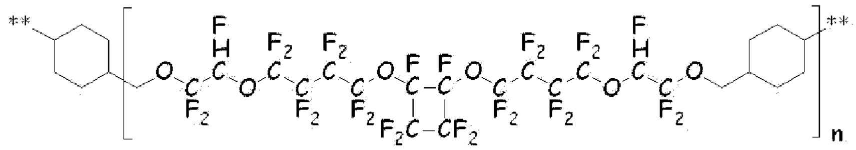

In a 5,000-mL flask, 640 g of the product 1-1-1, 133.8 g of NaF, and 1,058 g of the compound represented by Formula B were mixed and stirred at 50°C for 20 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 780 g of a product 1-1-2.

The molecular weight distribution (Mw/Mn) of the product 1-1-2 was 1.68. The product 1-1-2 contained compounds represented by the following Formulae 1-1-2A, 1-1-2B, and 1-1-2C. It is noted that the compound represented by Formula 1-1-1C is not affected by the synthesis reaction for product 1-1-2, and thus the compound represented by Formula 1-1-2C is identical to the compound represented by Formula 1-1-1C. The average of the number n was 2. 76 mol% of the terminal functional groups in the entire product 1-1-2 were esters, while 24 mol% were vinyl ethers.

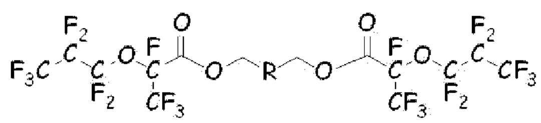 (1-1-2A)

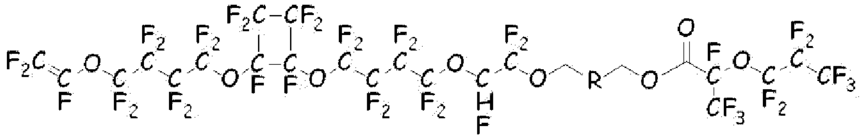 (1-1-2B)

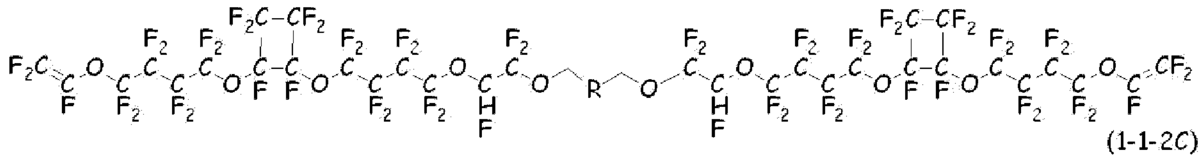

(1-1-2C)

R: 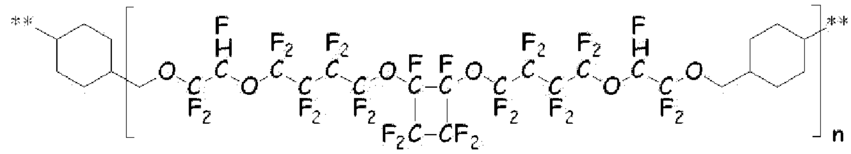

To a 3,000-mL nickel autoclave, 2,800 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 147 L/h for 1 hour. Then, 750 g of the product 1-1-2 was injected for 20 hours while blowing the 20 vol%- diluted fluorine gas at the same flow rate. Further, the 20 vol%- diluted fluorine gas was blown at the same rate for 1 hour, and then nitrogen gas was further blown for 1 hour. The reaction solution was collected from the autoclave and concentrated to obtain 937 g of a product 1-1-3.

The molecular weight distribution (Mw/Mn) of the product 1-1-3 was 1.66. The product 1-1-3 contained compounds represented by the following Formulae 1-1-3A, 1-1-3B, and 1-1-3C. The average of the number n was 2. 72 mol% of the terminal functional groups in the entire product 1-1-3 were esters, while 28 mol% were $CF_3$ terminals.

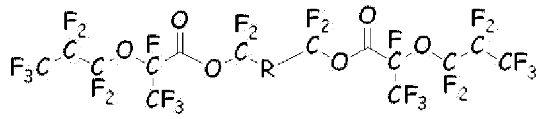 (1-1-3A)

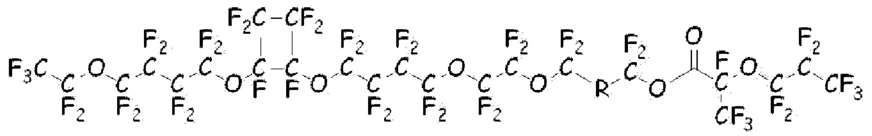 (1-1-3B)

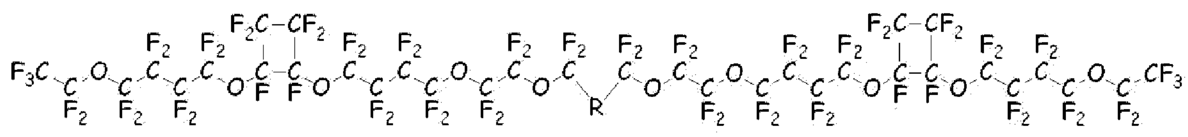

(1-1-3C)

R: 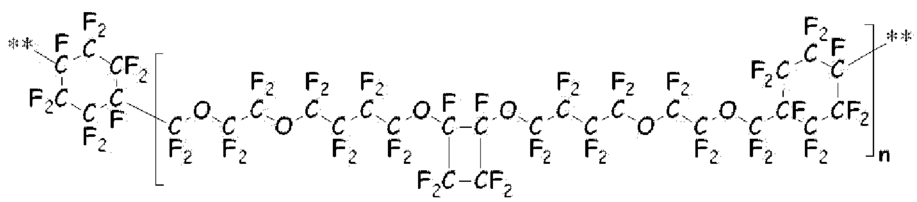

In a 2,000-mL flask, 930 g of the product 1-1-3, 112.9 g of NaF, and 86.1 g of methanol were mixed and stirred at 0°C for 2 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 720 g of a product 1-1-4.

The molecular weight distribution (Mw/Mn) of the product 1-1-4 was 1.70. The product 1-1-4 contained compounds represented by the following Formulae 1-1-4A, 1-1-4B, and 1-1-4C. It is noted that the compound represented by Formula 1-1-3C is not affected by the synthesis reaction for product 1-1-4, and thus the compound represented by Formula 1-1-4C is identical to the compound represented by Formula 1-1-3C. The average of the number n was 2. 72

mol% of the terminal functional groups in the entire product 1-1-4 were esters, while 28 mol% were $CF_3$ terminals.

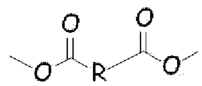

(1-1-4A)

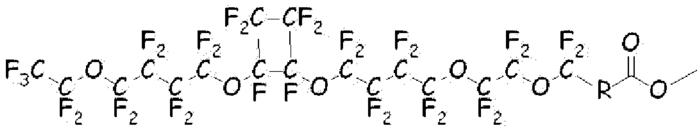

(1-1-4B)

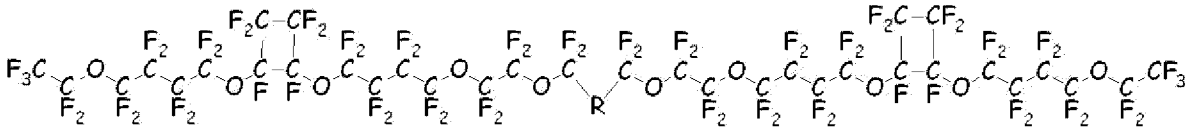

(1-1-4C)

R:

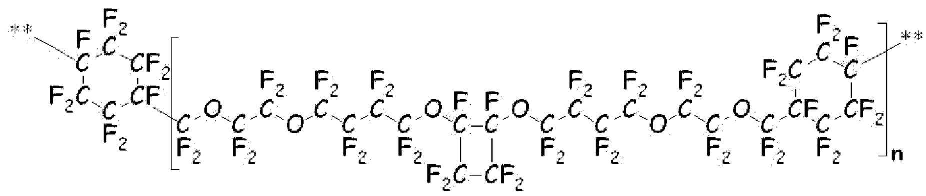

To a 500-mL three-necked flask, 4.0 g of $NaBH_4$ powder was added, and then 150 g of a fluorine-containing organic solvent (produced by AGC Inc.; ASAHIKLIN® AC-2000, 1H-tridecafluorohexane; hereinafter referred to as AC-2000) was added. A liquid obtained by mixing 150 g of the product 1-1-4, 6.8 g of methanol, and 150 g of AC-2000 was added dropwise at temperatures not exceeding 10°C. After the total volume was added dropwise, a solution obtained by mixing 6.8 g of methanol and 6.8 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 110 g of a product 1-1-5.

The molecular weight distribution (Mw/Mn) of the product 1-1-5 was 1.72. The product 1-1-5 contained compounds represented by the following Formulae 1-1-5A, 1-1-5B, and 1-1-5C. It is noted that the compound represented by Formula 1-1-4C is not affected by the synthesis reaction for product 1-1-5, and thus the compound represented by Formula 1-1-5C is identical to the compound represented by Formula 1-1-4C. The average of the number n was 2. 72 mol% of the terminal functional groups in the entire product 1-1-5 were alcohols, while 28 mol% were $CF_3$ terminals.

The obtained product 1-1-5 was purified by column chromatography, and found to contain 10% of a compound having $CF_3$ at the both terminals (compound represented by Formula 1-1-5C), 36% of a compound having $CF_3$ and OH (compound represented by Formula 1-1-5B), and 54% of a compound having OH at the both terminals (compound represented by Formula 1-1-5A).

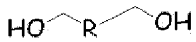

(1-1-5A)

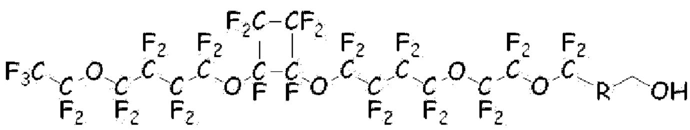

(1-1-5B)

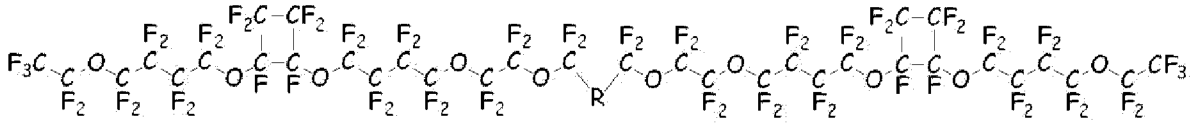

(1-1-5C)

R: 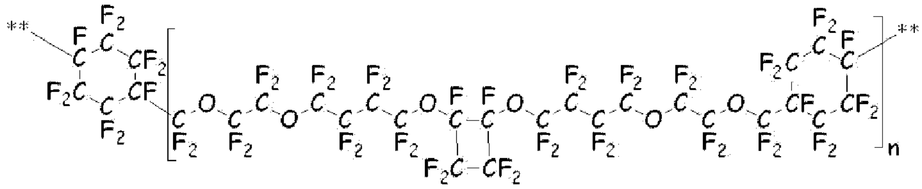

[Synthesis Example 1-2]

To a three-neck flask equipped with a stirring blade, a thermometer, and a reflux condenser, 40.0 g of NaOH, 966.0 g of acetonitrile, and 138.0 g of 1,4-benzenedimethanol were added, and mixed at 40°C with stirring, and 709.3 g of the compound represented by Formula G was added dropwise. Thereafter, the mixture was heated to 90°C, and the progress of the reaction was monitored by checking with NMR. After determination that the amounts of diol compound and divinyl ether compound remaining in the reaction system were reduced, the reaction was stopped and concentration was performed to remove acetonitrile, to which hydrochloric acid was added with stirring. The mixture was separated into two layers, and the organic layer was collected. This was designated as a product 1-2-1. The amount of the collected liquid product 1-2-1 was 805 g.

The product 1-2-1 was purified by column chromatography to collect 464 g of a product having alcohol at the both terminals (compound represented by Formula 1-2-1A). The molecular weight distribution (Mw/Mn) of the compound represented by Formula 1-2-1A was 1.55. The average of the number n was 3. 174 g of a compound having alcohol at one terminal and vinyl at the other terminal (compound represented by Formula 1-2-1B), and 86.9 g of a compound having vinyl at the both terminals (compound represented by Formula 1-2-1C) were collected.

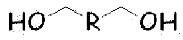 (1-2-1A)

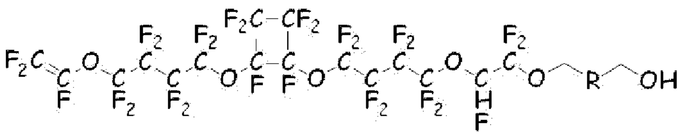 (1-2-1B)

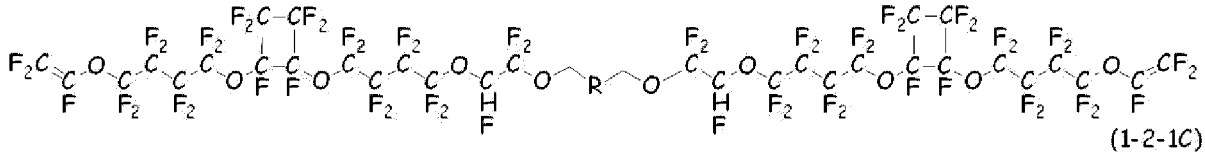

(1-2-1C)

R: 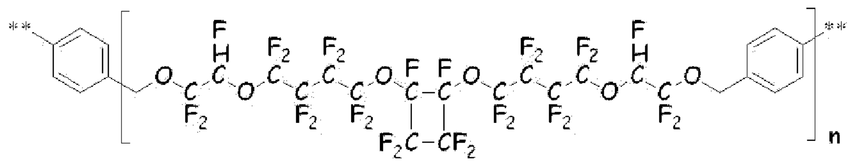

In a 1,000-mL flask, 200 g of the compound represented by Formula 1-2-1A, 28.8 g of NaF, and 227.7 g of the compound represented by Formula B were mixed and stirred at 50°C for 20 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 225.8 g of a compound represented by Formula 1-2-2A.

The molecular weight distribution (Mw/Mn) of the compound represented by Formula 1-2-2A was 1.52. The average of the number n was 3.

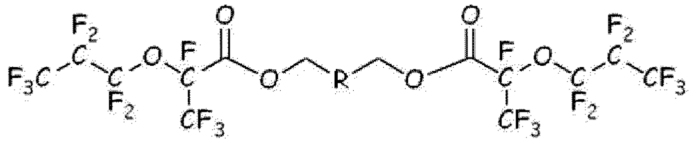

(1-2-2A)

R:

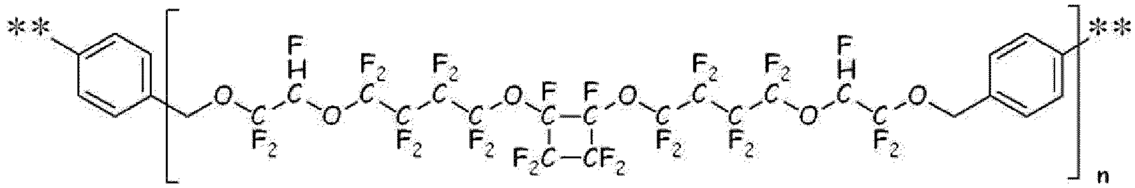

To a 3,000-mL nickel autoclave, 2,800 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 116 L/h for 1 hour. Then, 200 g of the compound represented by Formula 1-2-2A was injected for 10 hours while blowing the 20 vol%- diluted fluorine gas at the same flow rate. Further, the 20 vol%- diluted fluorine gas was blown at the same rate for 1 hour, and then nitrogen gas was further blown for 1 hour. The reaction solution was collected from the autoclave and concentrated to obtain 234 g of a compound represented by Formula 1-2-3A.

The molecular weight distribution (Mw/Mn) of the compound represented by Formula 1-2-3A was 1.66. The average of the number n was 3.

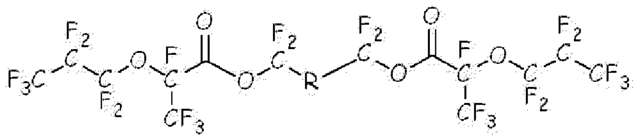

(1-2-3A)

R:

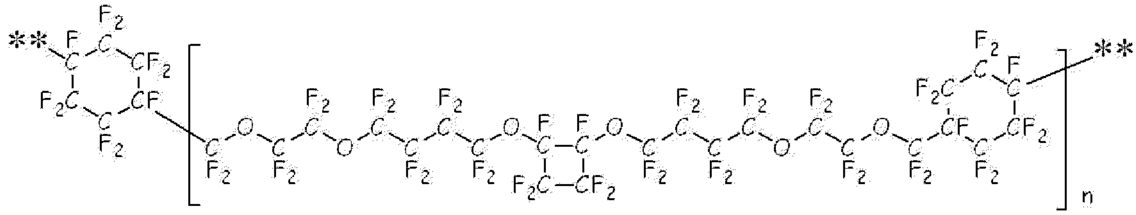

In a 500-mL flask, 230 g of the compound represented by Formula 1-2-3A, 22.1 g of NaF, and 16.9 g of methanol were mixed and stirred at 0°C for 2 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 186 g of a compound represented by Formula 1-2-4A.

The molecular weight distribution (Mw/Mn) of the compound represented by Formula 1-2-4A was 1.62. The average of the number n was 3.

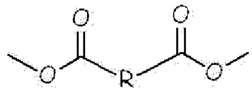

(1-2-4A)

R: 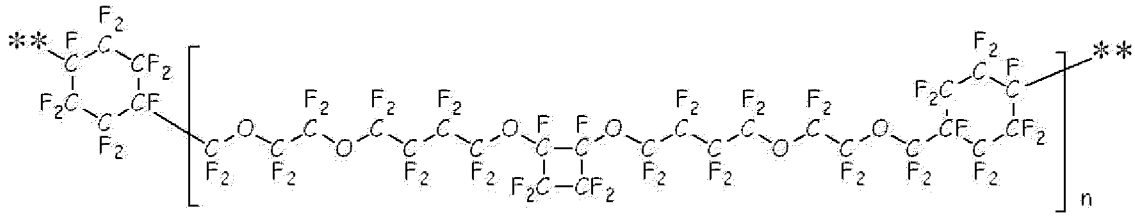

To a 500-mL three-necked flask, 3.0 g of $NaBH_4$ powder was added, and 150 g of AC-2000 was added. A liquid obtained by mixing 150 g of the compound represented by Formula 1-2-4A, 5.2 g of methanol, and 150 g of AC-2000 was added dropwise at temperatures not exceeding 10°C. After the total volume was added dropwise, a solution obtained by mixing 5.2 g of methanol and 5.2 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 118 g of a compound represented by Formula 1-2-5A.

The molecular weight distribution (Mw/Mn) of the compound represented by Formula 1-2-5A was 1.61. The average of the number n was 3.

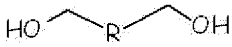 (1-2-5A)

R: 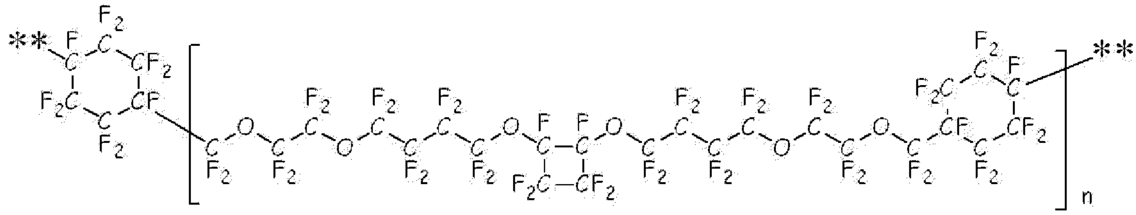

[Synthesis Example 1-3]

To a three-neck flask equipped with a stirring blade, a thermometer, and a reflux condenser, 10.0 g of NaOH, 588.7 g of acetonitrile, and 84.1 g of 2,2-bis(4-hydroxyphenyl)hexafluoropropane were added, and mixed at 40°C with stirring, and 118.3 g of the compound represented by Formula G was added dropwise. Thereafter, the mixture was heated to 90°C, and the progress of the reaction was monitored by checking with NMR. After determination that the amounts of diol compound and divinyl ether compound remaining in the reaction system were reduced, the reaction was stopped and concentration was performed to remove acetonitrile, to which hydrochloric acid was added with stirring. The mixture was separated into two layers, and the organic layer was collected. This was designated as a product 1-3-1. The amount of the collected liquid product 1-3-1 was 192 g.

The product 1-3-1 was purified by column chromatography to collect 124 g of a product having alcohol at the both terminals a product having phenolic hydroxy groups at the both terminals (compound represented by Formula 1-3-1A). The molecular weight distribution (Mw/Mn) of the compound represented by Formula 1-3-1A was 1.72. The average of the number n was 2. 44.9 g of a compound having a phenolic hydroxy group at one terminal and vinyl at the other terminal (compound represented by Formula 1-3-1B), and 3.46 g of a compound having vinyl at the both terminals (compound represented by Formula 1-3-1C) were collected.

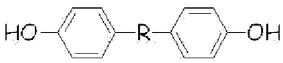 (1-3-1A)

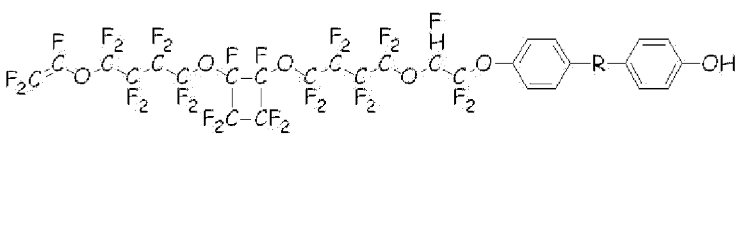 (1-3-1B)

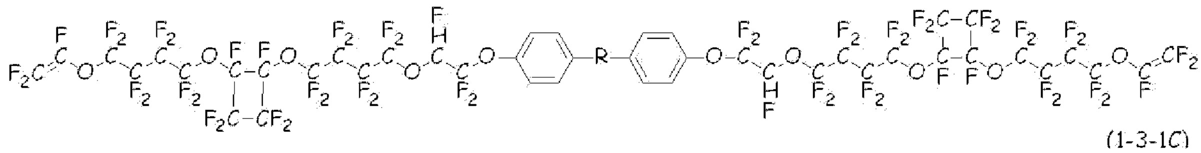

(1-3-1C)

R: 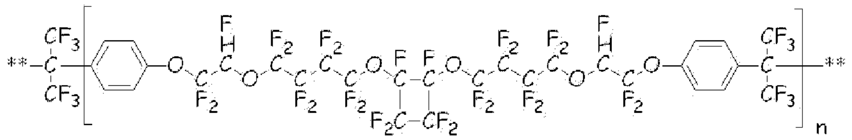

In a 1,000-mL flask, 120 g of the compound represented by Formula 1-3-1A, 19.5 g of NaF, and 154.2 g of the compound represented by Formula B were mixed and stirred at 50°C for 20 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 138 g of a compound represented by Formula 1-3-2A.

The molecular weight distribution (Mw/Mn) of the compound represented by Formula 1-3-2A was 1.70. The average of the number n was 2.

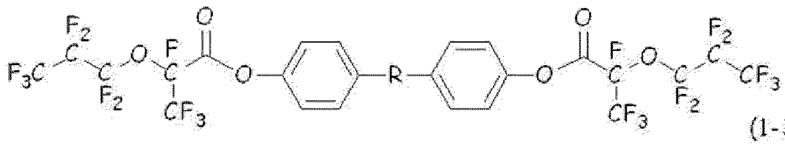

(1-3-2A)

R: 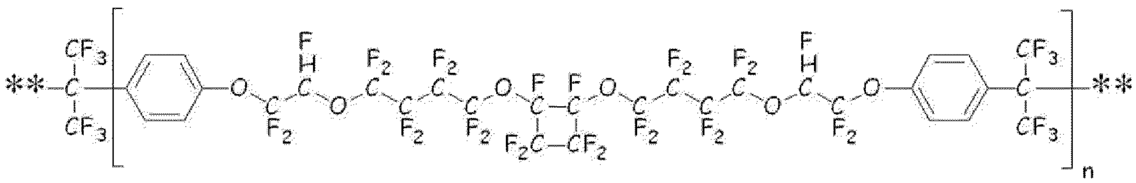

To a 3,000-mL nickel autoclave, 2,800 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 83 L/h for 1 hour. Then, 130 g of the compound represented by Formula 1-3-2A was injected for 10 hours while blowing the 20 vol%- diluted fluorine gas at the same flow rate. Further, the 20 vol%- diluted fluorine gas was blown at the same rate for 1 hour, and then nitrogen gas was further blown for 1 hour. The reaction solution was collected from the autoclave and concentrated to obtain 155 g of a compound represented by Formula 1-3-3A.

The molecular weight distribution (Mw/Mn) of the compound represented by Formula 1-3-3A was 1.74. The average of the number n was 2.

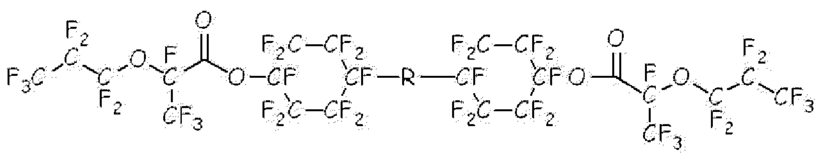

(1-3-3A)

R: 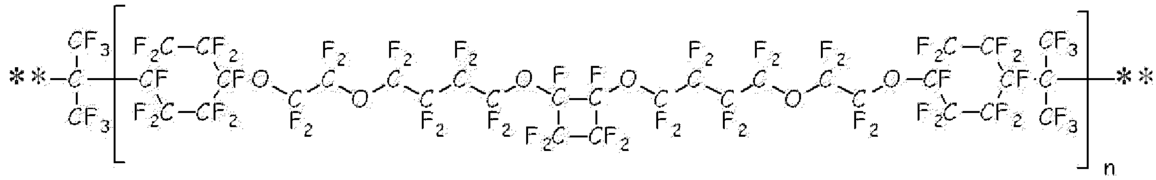

In a 500-mL flask, 150 g of the compound represented by Formula 1-3-3A, 15.6 g of NaF, and 11.9 g of methanol were mixed and stirred at 0°C for 2 hours. After completing the stirring, the temperature was brought back to 25°C, and

the mixture was filtered through a PTFE membrane filter to remove NaF, sodium hydrogen difluoride, etc. The obtained filtrate was concentrated at 60°C under vacuum to obtain 119 g of a compound represented by Formula 1-3-4A.

The molecular weight distribution (Mw/Mn) of the compound represented by Formula 1-3-4A was 1.76. The average of the number n was 2.

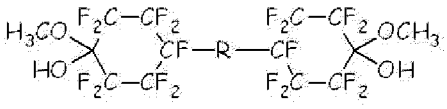

(1-3-4A)

R:

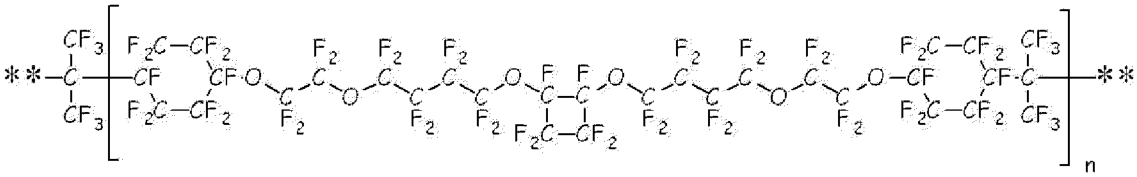

[Synthesis Example 1-4]

To a three-neck flask equipped with a stirring blade, a thermometer, and a reflux condenser, 8.2 g of NaOH, 280 g of acetonitrile, and 40.0 g of 1,3-adamantanedimethanol were added, and mixed at 40°C with stirring, and 788.1 g of the compound represented by Formula G was added dropwise. Thereafter, the mixture was heated to 90°C, and the progress of the reaction was monitored by checking with NMR. After determination that the amounts of diol compound and divinyl ether compound remaining in the reaction system were reduced, the reaction was stopped and concentration was performed to remove acetonitrile, to which hydrochloric acid was added with stirring. The mixture was separated into two layers, and the organic layer was collected. This was designated as a product 1-4-1. The amount of the collected liquid product 1-4-1 was 115 g.

The product 1-4-1 was purified by column chromatography to collect 82 g of a product having alcohol at the both terminals (compound represented by Formula 1-4-1A). The molecular weight distribution (Mw/Mn) of the compound represented by Formula 1-4-1A was 1.81. The average of the number n was 2. 14 g of a compound having alcohol at one terminal and vinyl at the other terminal (compound represented by Formula 1-4-1B), and 6.2 g of a compound having vinyl at the both terminals (compound represented by Formula 1-4-1C) were collected.

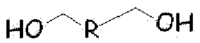

(1-4-1A)

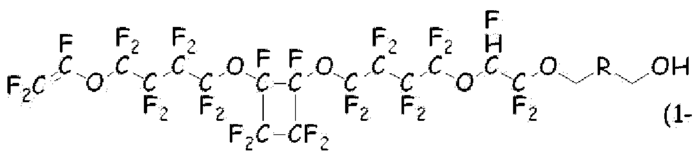

(1-4-1B)

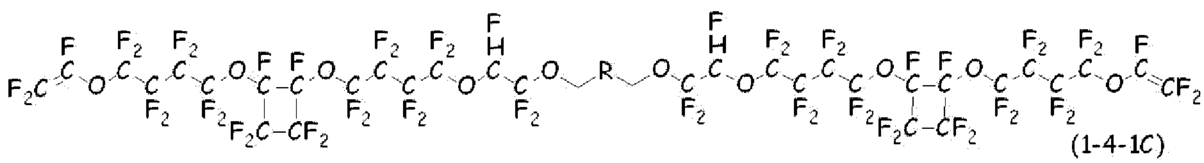

(1-4-1C)

R:

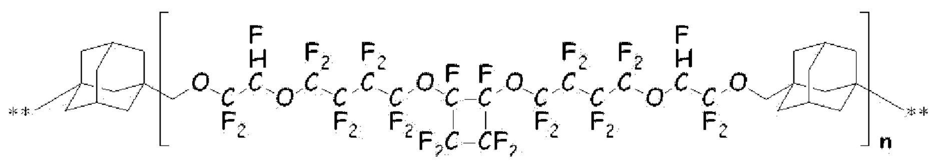

In a 500-mL flask, 80.0 g of the compound represented by Formula 1-4-1A, 15.5 g of NaF, and 122.7 g of the compound represented by Formula B were mixed and stirred at 50°C for 20 hours. After completing the stirring, the temperature was brought back to 25°C, and the mixture was filtered through a PTFE membrane filter to remove NaF,

sodium hydrogen difluoride, etc. The obtained filtrate was concentrated at 60°C under vacuum to obtain 95.9 g of a compound represented by Formula 1-4-2A.

The molecular weight distribution (Mw/Mn) of the compound represented by Formula 1-4-2A was 1.80. The average of the number n was 2.

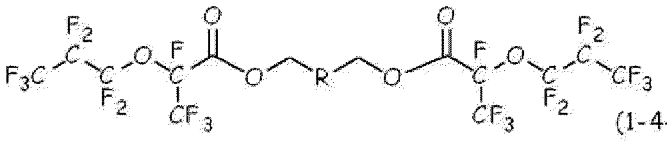

(1-4-2A)

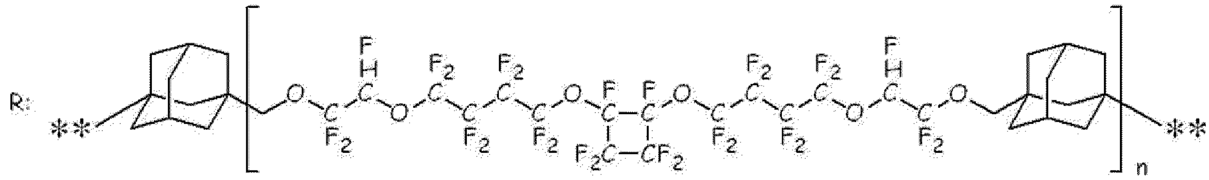

To a 3,000-mL nickel autoclave, 2,800 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 98 L/h for 1 hour. Then, 80 g of the compound represented by Formula 1-4-2A was injected for 3 hours while blowing the 20 vol%- diluted fluorine gas at the same flow rate. Further, the 20 vol%- diluted fluorine gas was blown at the same rate for 1 hour, and then nitrogen gas was further blown for 1 hour. The reaction solution was collected from the autoclave and concentrated to obtain 93 g of a compound represented by Formula 1-4-3A.

The molecular weight distribution (Mw/Mn) of the compound represented by Formula 1-4-3A was 1.82. The average of the number n was 2.

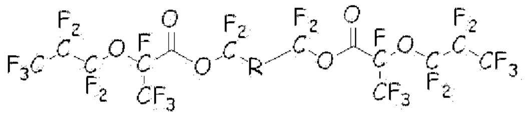

(1-4-3A)

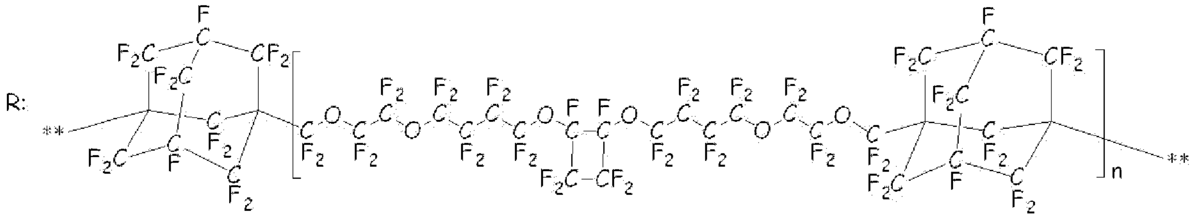

In a 500-mL flask, 80.0 g of the compound represented by Formula 1-4-3A, 9.3 g of NaF, and 7.1 g of methanol were mixed and stirred at 0°C for 2 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 62 g of a compound represented by Formula 1-4-4A.

The molecular weight distribution (Mw/Mn) of the compound represented by Formula 1-4-4A was 1.81. The average of the number n was 2.

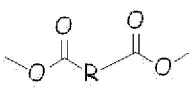

(1-4-4A)

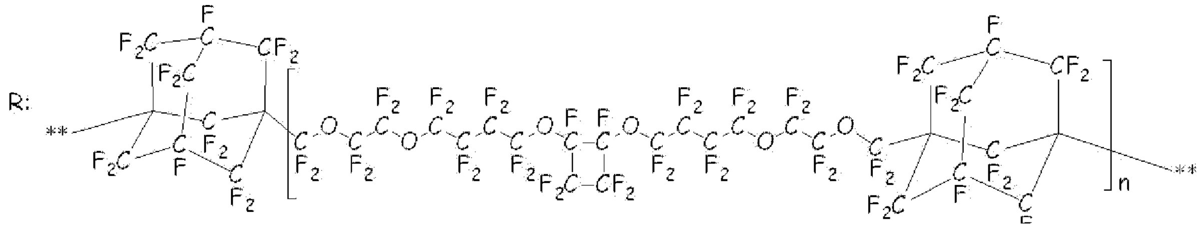

To a 500-mL three-necked flask, 1.5 g of $NaBH_4$ powder was added, and 60 g of AC-2000 was added. A liquid obtained by mixing 60 g of the compound represented by Formula 1-4-4A, 2.6 g of methanol, and 60 g of AC-2000 was added dropwise at temperatures not exceeding 10°C. After the total volume was added dropwise, a solution obtained by mixing 2.6 g of methanol and 2.6 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 44 g of a compound represented by Formula 1-4-5A.

The molecular weight distribution (Mw/Mn) of the compound represented by Formula 1-4-5A was 1.81. The average of the number n was 2.

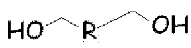 (1-4-5A)

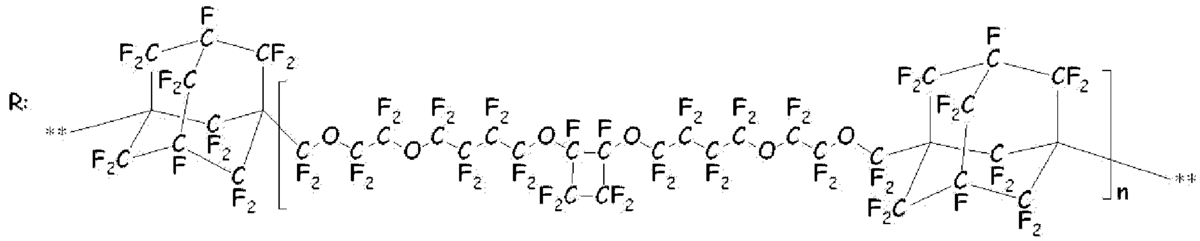

[Synthesis Example 2-1]

To a three-neck flask equipped with a stirring blade, a thermometer, and a reflux condenser, 6.2 g of NaOH, 350 g of acetonitrile, and 50.0 g of a compound represented by the following Formula H were added.

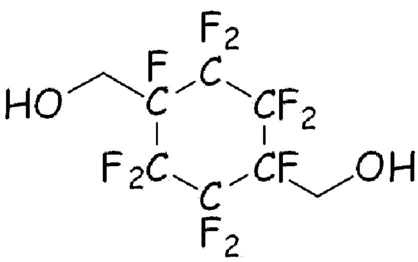 (H)

The materials were mixed at 40°C with stirring, and 85.1 g of the compound represented by Formula G was added dropwise. Thereafter, the mixture was heated to 90°C, and the progress of the reaction was monitored by checking with NMR. After determination that the amounts of diol compound and divinyl ether compound remaining in the reaction system were reduced, the reaction was stopped and concentration was performed to remove acetonitrile, to which hydrochloric acid was added with stirring. The mixture was separated into two layers, and the organic layer was collected. This was designated as a product 2-1-1. The amount of the collected liquid product 2-1-1 was 121 g.

The product 2-1-1 was purified by column chromatography to collect 87 g of a product having alcohol at the both terminals (compound represented by Formula 2-1-1A). The molecular weight distribution (Mw/Mn) of the compound represented by Formula 2-1-1A was 1.46. The average of the number n was 3. 15 g of a compound having alcohol at one terminal and vinyl at the other terminal (compound represented by Formula 2-1-1B), and 6.6 g of a compound having vinyl at the both terminals (compound represented by Formula 2-1-1C) were collected.

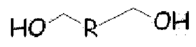
(2-1-1A)

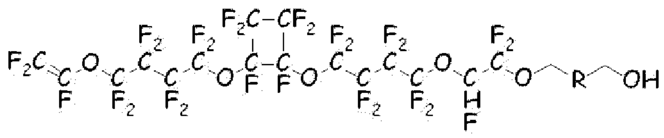
(2-1-1B)

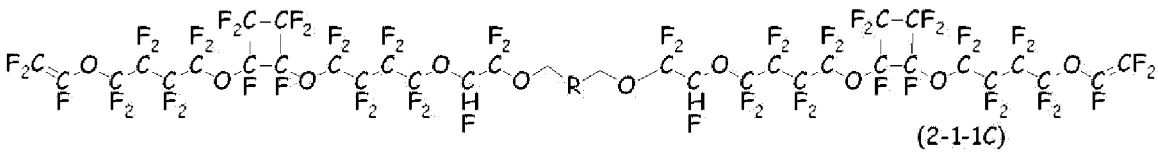
(2-1-1C)

R: 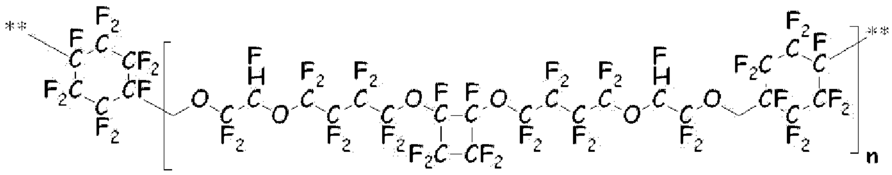

In a 500-mL flask, 80.0 g of the compound represented by Formula 2-1-1A, 9.2 g of NaF, and 72.6 g of the compound represented by Formula B were mixed and stirred at 50°C for 20 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 87.1 g of a compound represented by Formula 2-1-2A.

The molecular weight distribution (Mw/Mn) of the compound represented by Formula 2-1-2A was 1.44. The average of the number n was 3.

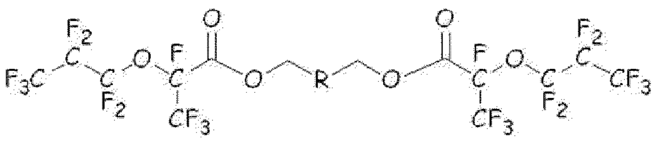
(2-1-2A)

R: 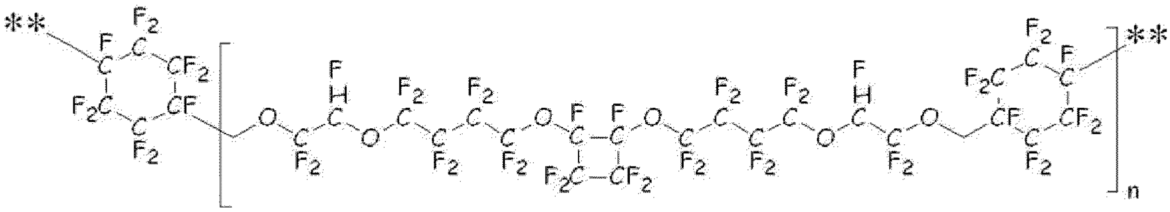

To a 3,000-mL nickel autoclave, 2,800 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 102 L/h for 1 hour. Then, 85 g of the compound represented by Formula 2-1-2A was injected for 2 hours while blowing the 20 vol%- diluted fluorine gas at the same flow rate. Further, the 20 vol%- diluted fluorine gas was blown at the same rate for 1 hour, and then nitrogen gas was further blown for 1 hour. The reaction solution was collected from the autoclave and concentrated to obtain 91 g of a compound represented by Formula 2-1-3A.

The molecular weight distribution (Mw/Mn) of the compound represented by Formula 2-1-3A was 1.47. The average of the number n was 3.

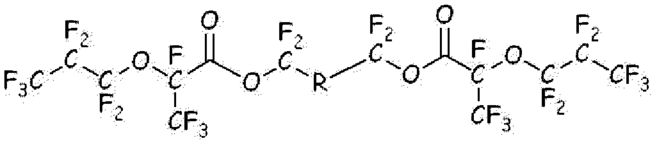

(2-1-3A)

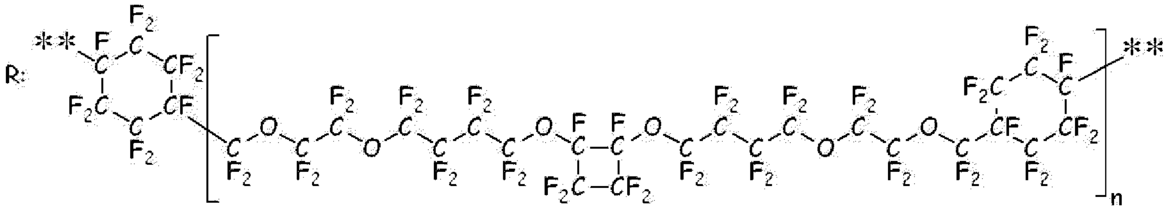

In a 500-mL flask, 90.0 g of the compound represented by Formula 2-1-3A, 7.4 g of NaF, and 5.6 g of methanol were mixed and stirred at 0°C for 2 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 74 g of a compound represented by Formula 2-1-4A.

The molecular weight distribution (Mw/Mn) of the compound represented by Formula 2-1-4A was 1.42. The average of the number n was 3.

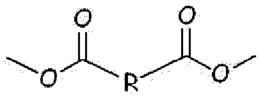

(2-1-4A)

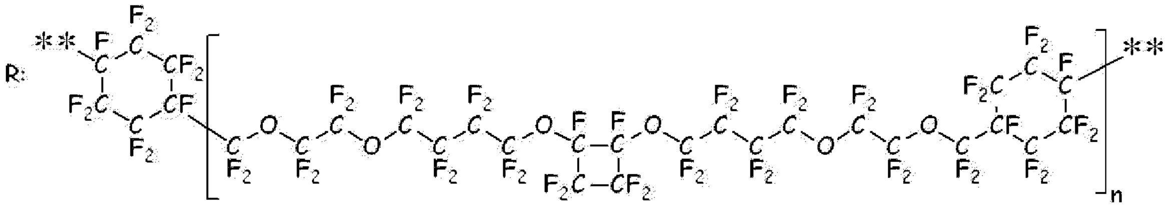

To a 500-mL three-necked flask, 1.2 g of $NaBH_4$ powder was added, and 70 g of AC-2000 was added. A liquid obtained by mixing 70 g of the compound represented by Formula 2-1-4A, 2.0 g of methanol, and 70 g of AC-2000 was added dropwise at temperatures not exceeding 10°C. After the total volume was added dropwise, a solution obtained by mixing 2.0 g of methanol and 2.0 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 57 g of a compound represented by Formula 2-1-5A.

The molecular weight distribution (Mw/Mn) of the compound represented by Formula 2-1-5A was 1.44. The average of the number n was 3.

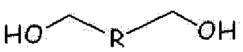

(2-1-5A)

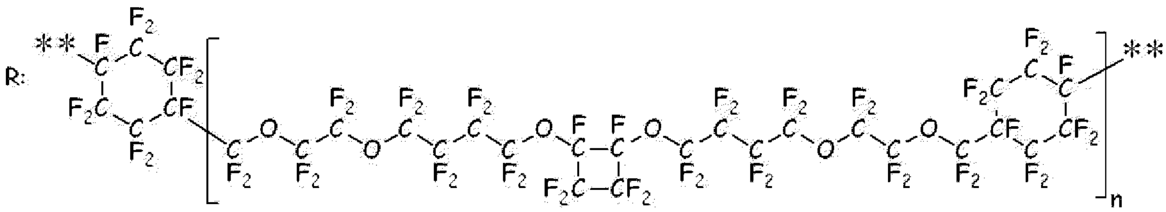

[Synthesis Example 3-1]

To a three-neck flask equipped with a stirring blade, a thermometer, and a reflux condenser, 2.6 g of NaOH, 350 g of acetonitrile, and 50.0 g of the compound represented by Formula A were added, and mixed at 40°C with stirring, and 19.1 g of a compound represented by the following Formula I was added dropwise.

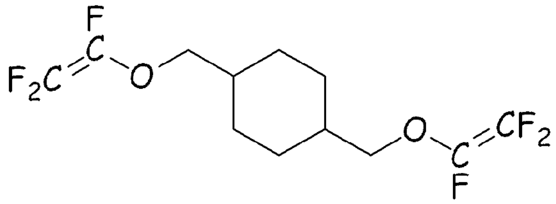

(I)

Thereafter, the mixture was heated to 90°C, and the progress of the reaction was monitored by checking with NMR. After determination that the amounts of diol compound and divinyl ether compound remaining in the reaction system were reduced, the reaction was stopped and concentration was performed to remove acetonitrile, to which hydrochloric acid was added with stirring. The mixture was separated into two layers, and the organic layer was collected. This was designated as a product 3-1-1. The amount of the collected liquid product 3-1-1 was 62 g.

The product 3-1-1 was purified by column chromatography to collect 25.8 g of a product having alcohol at the both terminals (compound represented by Formula 3-1-1A). The molecular weight distribution (Mw/Mn) of the compound represented by Formula 3-1-1A was 1.60. The average of the number n was 2. 26.9 g of a compound having alcohol at one terminal and vinyl at the other terminal (compound represented by Formula 3-1-1B), and 3.4 g of a compound having vinyl at the both terminals (compound represented by Formula 3-1-1C) were collected.

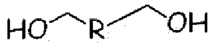

(3-1-1A)

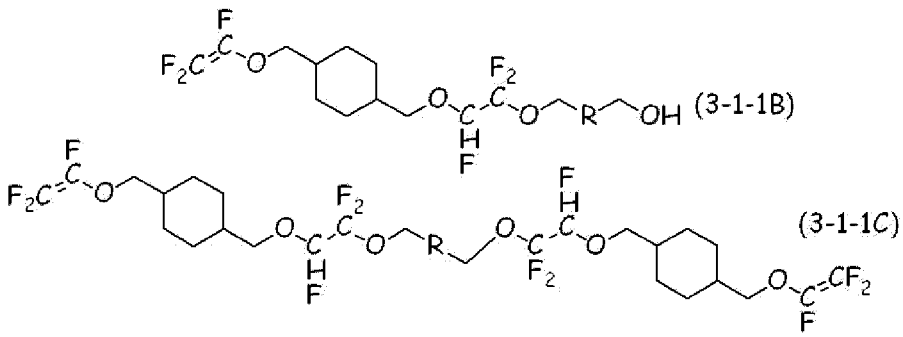

(3-1-1B)

(3-1-1C)

R:

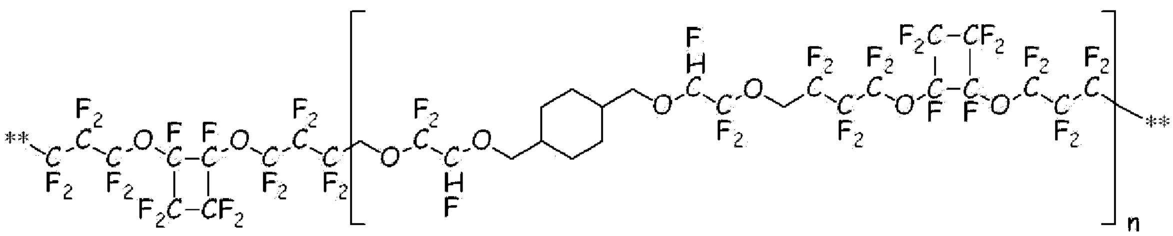

In a 500-mL flask, 20.0 g of the compound represented by Formula 3-1-1A, 3.7 g of NaF, and 29.2 g of the compound represented by Formula B were mixed and stirred at 50°C for 20 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 23.7 g of a compound represented by Formula 3-1-2A.

The molecular weight distribution (Mw/Mn) of the compound represented by Formula 3-1-2A was 1.60. The average of the number n was 2.

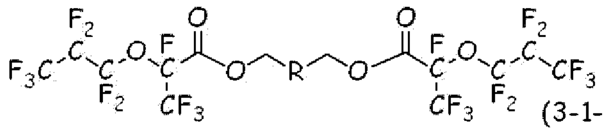

(3-1-2A)

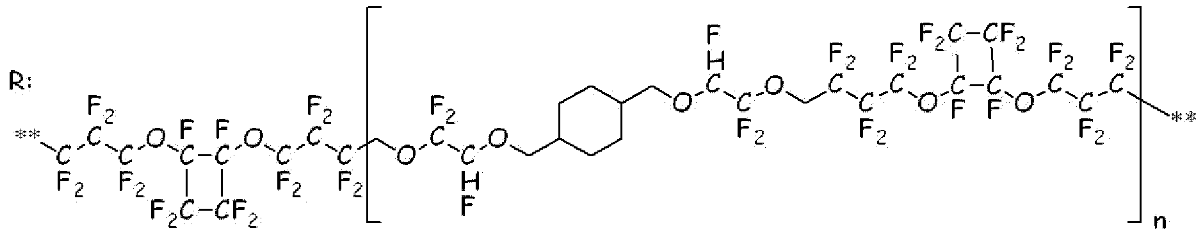

To a 3,000-mL nickel autoclave, 2,800 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 71 L/h for 1 hour. Then, 20 g of the compound represented by Formula 3-1-2A was injected for 1 hour while blowing the 20 vol%- diluted fluorine gas at the same flow rate. Further, the 20 vol%- diluted fluorine gas was blown at the same rate for 1 hour, and then nitrogen gas was further blown for 1 hour. The reaction solution was collected from the autoclave and concentrated to obtain 23 g of a compound represented by Formula 3-1-3A.

The molecular weight distribution (Mw/Mn) of the compound represented by Formula 3-1-3A was 1.62. The average of the number n was 2.

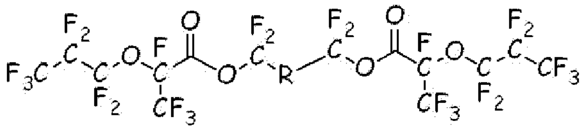

(3-1-3A)

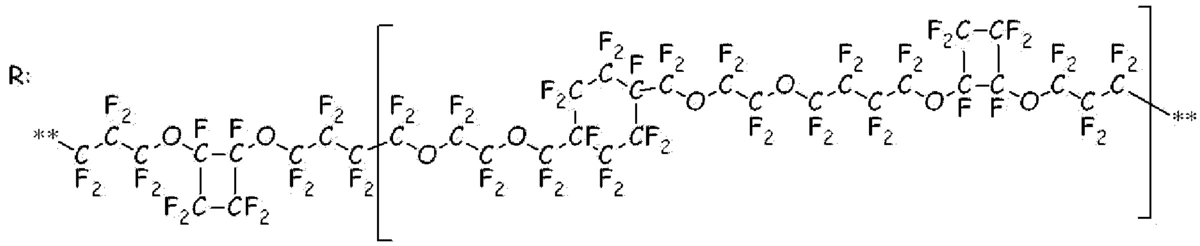

In a 100-mL flask, 20.0 g of the compound represented by Formula 3-1-3A, 2.3 g of NaF, and 1.7 g of methanol were mixed and stirred at 0°C for 2 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 15.7 g of a compound represented by Formula 3-1-4A.

The molecular weight distribution (Mw/Mn) of the compound represented by Formula 3-1-4A was 1.63. The average of the number n was 2.

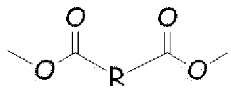

(3-1-4A)

R:
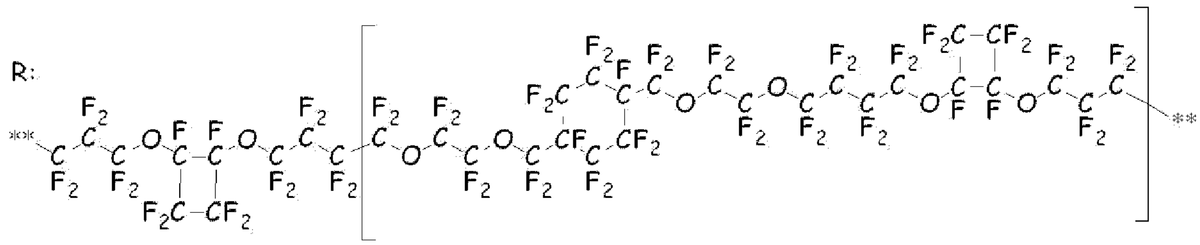

To a 500-mL three-necked flask, 0.4 g of $NaBH_4$ powder was added, and 15 g of AC-2000 was added. A liquid obtained by mixing 15 g of the compound represented by Formula 3-1-4A, 0.6 g of methanol, and 15 g of AC-2000 was added dropwise at temperatures not exceeding 10°C. After the total volume was added dropwise, a solution obtained by mixing 0.6 g of methanol and 15 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 11 g of a compound represented by Formula 3-1-5A.

The molecular weight distribution (Mw/Mn) of the compound represented by Formula 3-1-5A was 1.64. The average of the number n was 2.

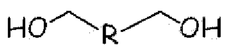 (3-1-5A)

R:
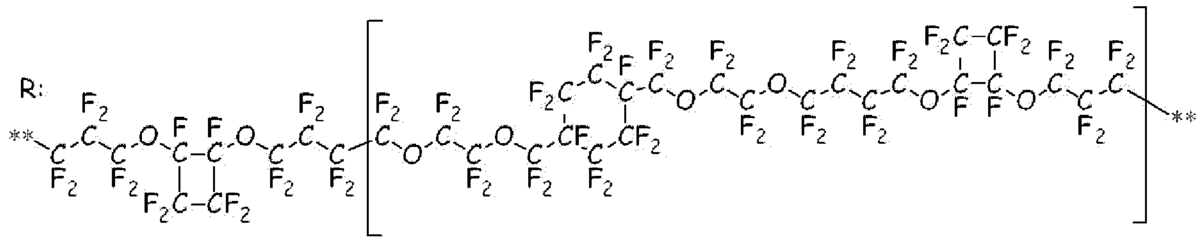

[Synthesis Example 3-2]

To a three-neck flask equipped with a stirring blade, a thermometer, and a reflux condenser, 6.2 g of NaOH, 350 g of acetonitrile, and 50.0 g of the compound represented by the above-described Formula H were added, and mixed at 40°C with stirring, and 28.3 g of a compound represented by the following Formula J was added dropwise.

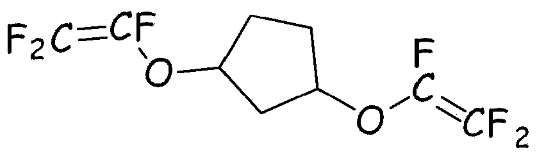 (J)

Thereafter, the mixture was heated to 90°C, and the progress of the reaction was monitored by checking with NMR. After determination that the amounts of diol compound and divinyl ether compound remaining in the reaction system were reduced, the reaction was stopped and concentration was performed to remove acetonitrile, to which hydrochloric acid was added with stirring. The mixture was separated into two layers, and the organic layer was collected. This was designated as a product 3-2-1. The amount of the collected liquid product 3-2-1 was 70 g.

The product 3-2-1 was purified by column chromatography to collect 29.2 g of a product having alcohol at the both terminals (compound represented by Formula 3-2-1A). The molecular weight distribution (Mw/Mn) of the compound represented by Formula 3-2-1A was 1.52. The average of the number n was 2. 30.4 g of a compound having alcohol at one terminal and vinyl at the other terminal (compound represented by Formula 3-2-1B), and 3.8 g of a compound having vinyl at the both terminals (compound represented by Formula 3-2-1C) were collected.

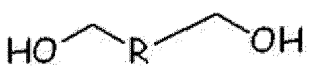 (3-2-1A)

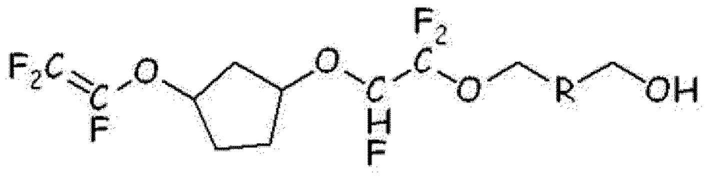

(3-2-1B)

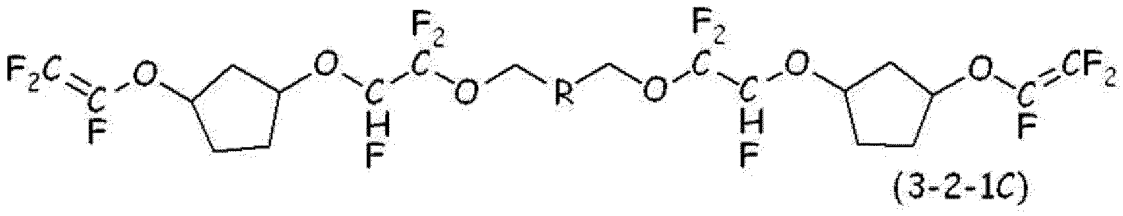

(3-2-1C)

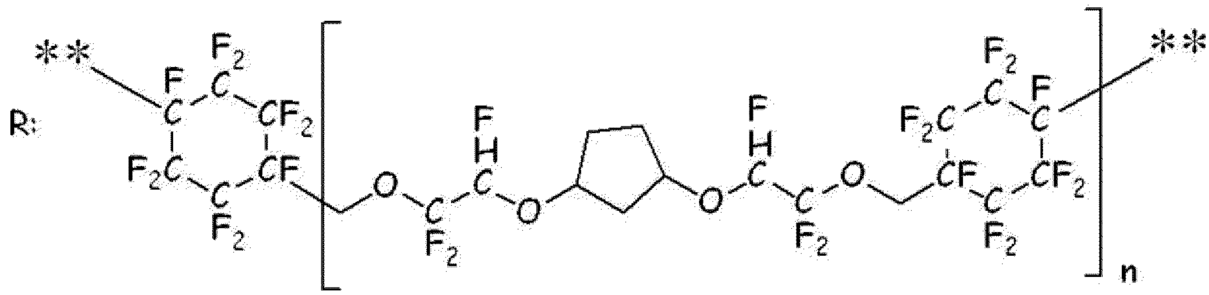

R:

In a 500-mL flask, 25.0 g of the compound represented by Formula 3-2-1A, 7.0 g of NaF, and 55.5 g of the compound represented by Formula B were mixed and stirred at 50°C for 20 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 32.9 g of a compound represented by Formula 3-2-2A.

The molecular weight distribution (Mw/Mn) of the compound represented by Formula 3-2-2A was 1.50. The average of the number n was 2.

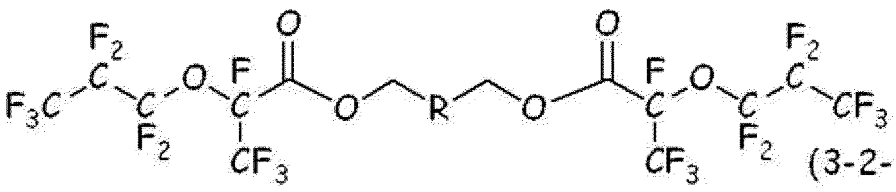

(3-2-2A)

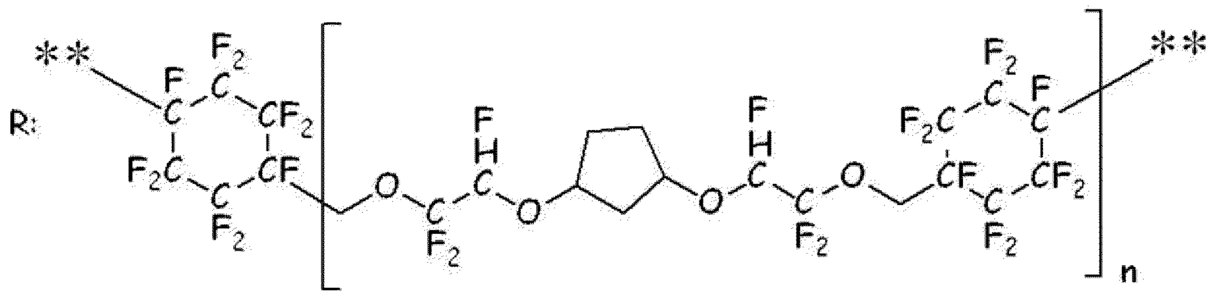

R:

To a 3,000-mL nickel autoclave, 2,800 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 97 L/h for 1 hour. Then, 20 g of the compound represented by Formula 3-2-2A was injected for 1 hour while blowing the 20 vol%- diluted fluorine gas at the same flow rate. Further, the 20 vol%- diluted fluorine

gas was blown at the same rate for 1 hour, and then nitrogen gas was further blown for 1 hour. The reaction solution was collected from the autoclave and concentrated to obtain 25 g of a compound represented by Formula 3-2-3A.

The molecular weight distribution (Mw/Mn) of the compound represented by Formula 3-2-3A was 1.52. The average of the number n was 2.

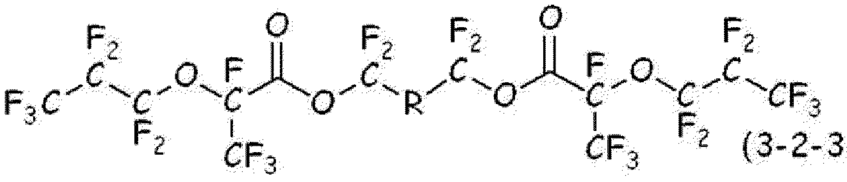

(3-2-3A)

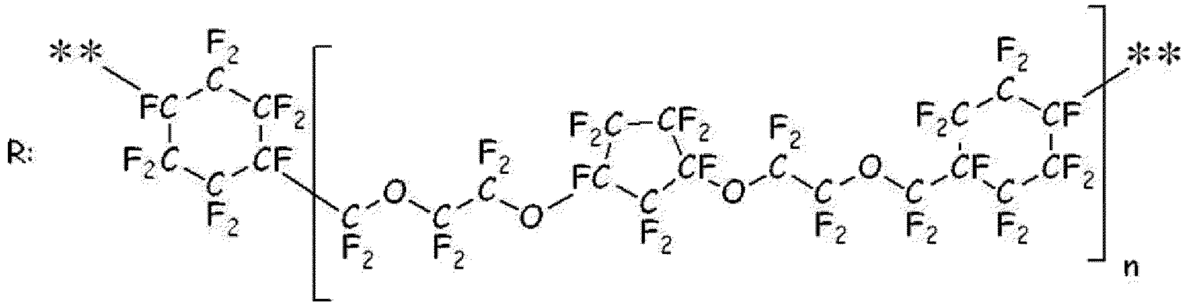

In a 100-mL flask, 20.0 g of the compound represented by Formula 3-2-3A, 2.3 g of NaF, and 1.7 g of methanol were mixed and stirred at 0°C for 2 hours. After completing the stirring, the temperature was brought back to 25°C, and the mixture was filtered through a PTFE membrane filter to remove NaF, sodium hydrogen difluoride, etc. The obtained filtrate was concentrated at 60°C under vacuum to obtain 14 g of a compound represented by Formula 3-2-4A.

The molecular weight distribution (Mw/Mn) of the compound represented by Formula 3-2-4A was 1.53. The average of the number n was 2.

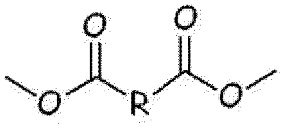

(3-2-4A)

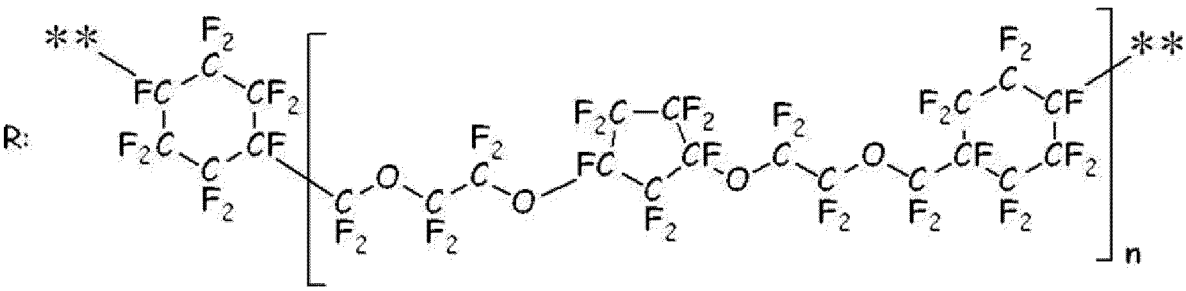

To a 500-mL three-necked flask, 0.3 g of $NaBH_4$ powder was added, and 10 g of AC-2000 was added. A liquid obtained by mixing 10 g of the compound represented by Formula 3-2-4A, 0.6 g of methanol, and 10 g of AC-2000 was added dropwise at temperatures not exceeding 10°C. After the total volume was added dropwise, a solution obtained by mixing 0.6 g of methanol and 10 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 6 g of a compound represented by Formula 3-2-5A.

The molecular weight distribution (Mw/Mn) of the compound represented by Formula 3-2-5A was 1.52. The average of the number n was 2.

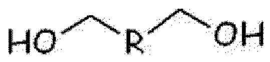

(3-2-5A)

R:

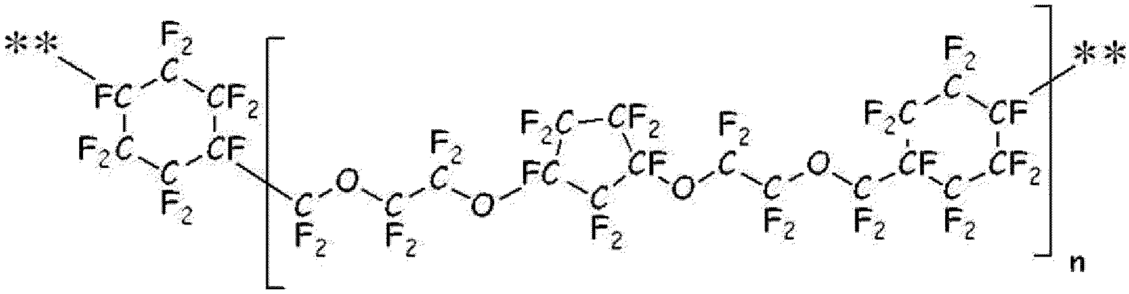

[Synthesis Example 4-1]

To a 500-mL hastelloy autoclave, 6.4 g of CsF powder was added. Then, 20.1 g of a compound represented by the following Formula K, that was prepared in advance from corresponding diol and $COF_2$, and 120 g of anhydrous Tetraglyme were added, which were cooled to -196°C under $N_2$ atmosphere for vacuum degassing. Thereafter, 50 g of the compound represented by the above-described Formula E was added, followed by reaction at 120°C for 42 hours under a pressure of 1. 2MPaG.

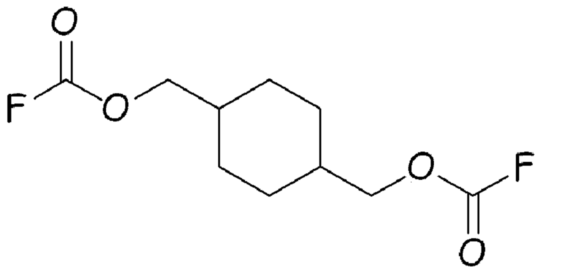

(K)

Thereafter, the reaction was continued at 170°C for 45 hours. After the reaction, the reaction was purged with low boiling-point gas, and 56 g of a produced polymer was collected.

The collected polymer was designated as a product 4-1-1. The product 4-1-1 contained compounds represented by the following Formulae 4-1-1A, 4-1-1B, and 4-1-1C. It is considered that the product 4-1-1 is produced via a mixture of compounds represented by the following Formulae 4-1-1A', 4-1-1B', and 4-1-1C'. It is noted that the compound represented by Formula 4-1-1C is identical to the compound represented by Formula 4-1-1C'.

The weight average molecular weight of the product 4-1-1 is 1,500. 45 mol% of the terminal groups in the entire product 4-1-1 were $CH_2F$, while 55 mol% were $CF_2COF$.

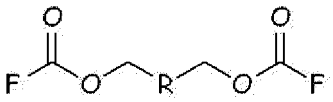

(4-1-1A')

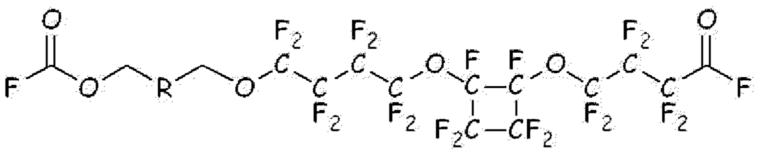

(4-1-1B')

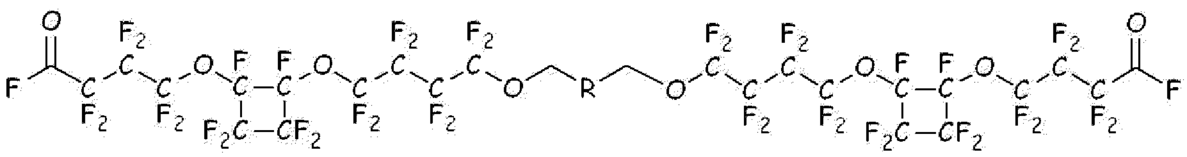

(4-1-1C')

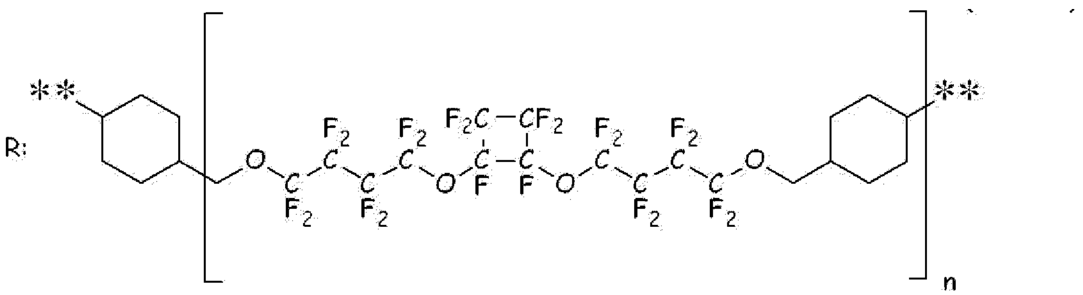

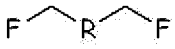 (4-1-1A)

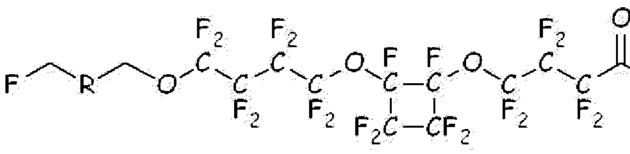 (4-1-1B)

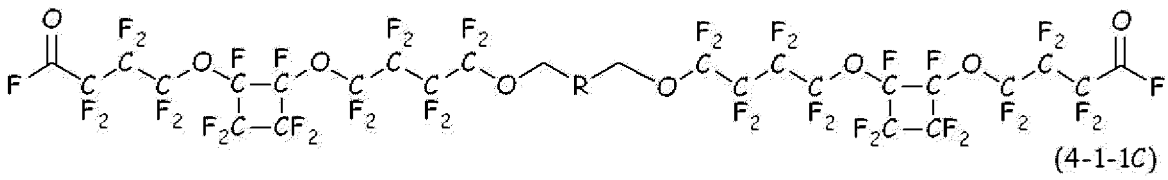

(4-1-1C)

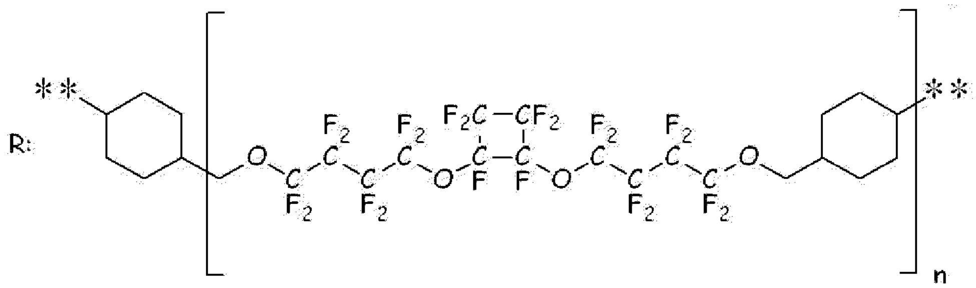

To a 500-mL PFA (tetrafluoroethylene-perfluoroalkyl vinyl ether copolymer resin) flask, 28 g of ethanol was added in advance, to which 56 g of the product 4-1-1 was added dropwise. During the dropwise addition, the dropping rate was adjusted so that the temperature did not exceed 10°C. Thereafter, the mixture was allowed to react at 40°C for 5 hours, then washed with water, and separated into two layers. Then the organic layer was concentrated, and 62 g of the organic layer was collected. This was designated as a product 4-1-2.

The product 4-1-2 contained compounds represented by the following Formulae 4-1-2A, 4-1-2B, and 4-1-2C. It is noted that the compound represented by Formula 4-1-1A is not affected by the synthesis reaction for product 4-1-2, and thus the compound represented by Formula 4-1-2A is identical to the compound represented by Formula 4-1-1A.

45 mol% of the terminal groups in the entire product 4-1-2 were $CH_2F$, while 55 mol% were $CF_2COOCH_2CH_3$. The proportion of $CH_2F$ was the same as the proportion of $CH_2F$ for the product 4-1-1.

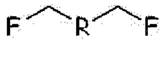 (4-1-2A)

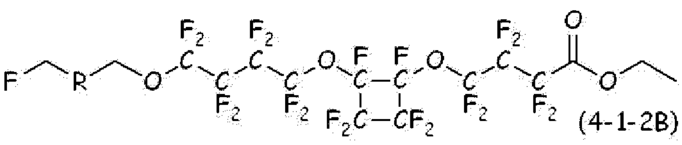

(4-1-2B)

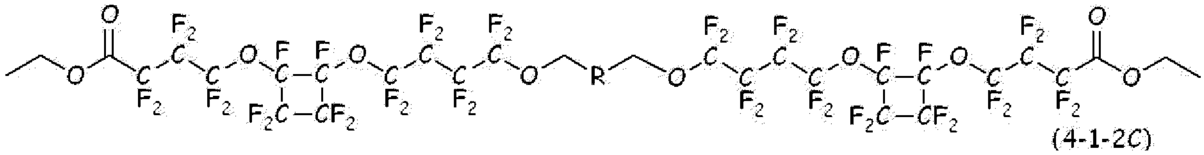

(4-1-2C)

R: 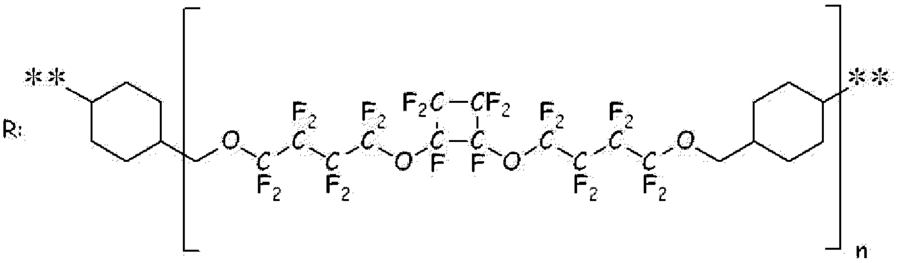

To a 500-mL nickel autoclave, 300 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 138 L/h for 1 hour. Then, 56 g of the product 4-1-2 was injected for 1 hour while blowing the 20 vol%- diluted fluorine gas at the same flow rate. Further, the 20 vol%- diluted fluorine gas was blown at the same rate for 1 hour, and then nitrogen gas was further blown for 1 hour. The reaction solution was collected from the autoclave and concentrated to obtain 69 g of a product 4-1-3.

The product 4-1-3 contained compounds represented by the following Formulae 4-1-3A, 4-1-3B, and 4-1-3C. 45 mol% of the terminal groups in the entire product 4-1-3 were $CF_3$, while 55 mol% were $CF_2COOCF_2CF_3$.

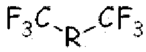 (4-1-3A)

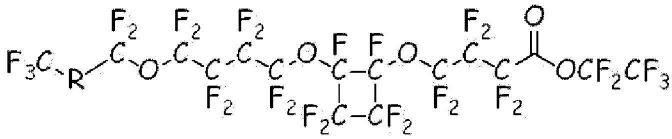 (4-1-3B)

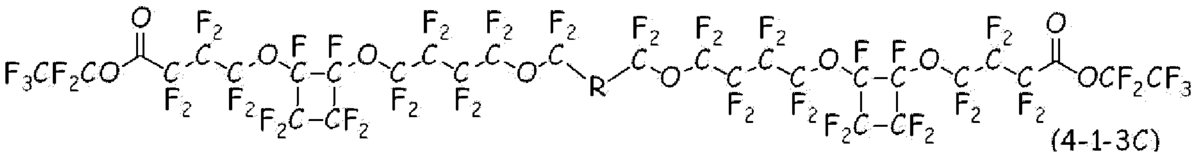

(4-1-3C)

R: 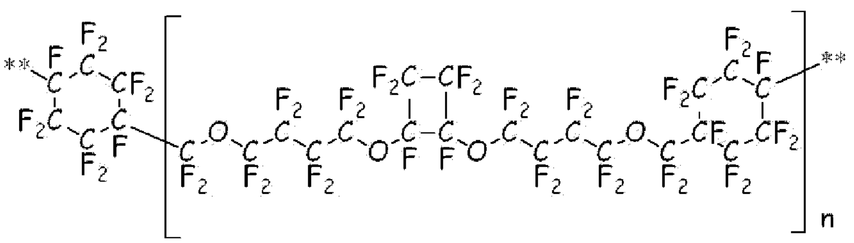

To a 500-mL PFA flask, 16 g of ethanol was added in advance, to which 69 g of the product 4-1-3 was added dropwise. During the dropwise addition, the dropping rate was adjusted so that the temperature did not exceed 10°C. Thereafter, the mixture was allowed to react at 40°C for 5 hours, then washed with water, and separated into two layers. Then the organic layer was concentrated, and 65 g of the organic layer was collected. This was designated as a product 4-1-4.

The product 4-1-4 contained compounds represented by the following Formulae 4-1-4A, 4-1-4B, and 4-1-4C. It is noted that the compound represented by Formula 4-1-3Ais not affected by the synthesis reaction for product 4-1-4, and thus the compound represented by Formula 4-1-4A is identical to the compound represented by Formula 4-1-3A.

45 mol% of the terminal groups in the entire product 4-1-4 were $CF_3$, while 55 mol% were $CF_2COOCH_2CH_3$.

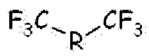
(4-1-4A)

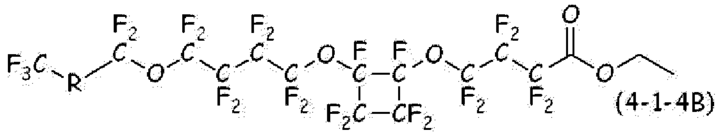
(4-1-4B)

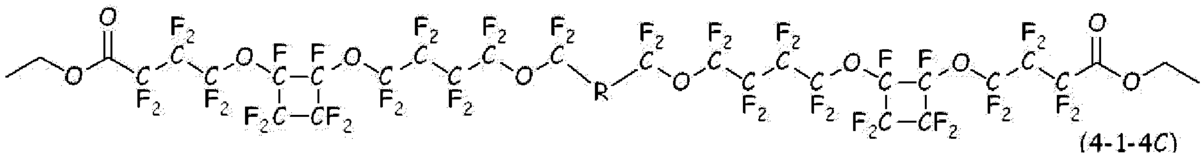
(4-1-4C)

R:
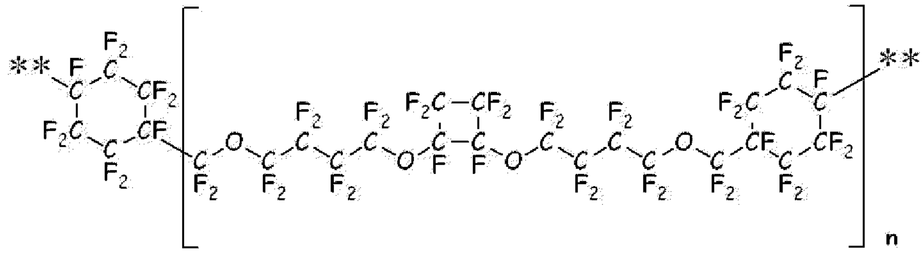

To a 500-mL three-necked flask, 2.5 g of $NaBH_4$ powder was added, and 65 g of AC-2000 was added. A solution obtained by mixing 65 g of the product 4-1-4, 4.2 g of methanol, and 65 g of AC-2000 was added dropwise at temperatures not exceeding 10°C. After the total volume was added dropwise, a solution obtained by mixing 4.2 g of methanol and 4.2 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 60 g of a product 4-1-5.

The product 4-1-5 contained compounds represented by the following Formulae 4-1-5A, 4-1-5B, and 4-1-5C. It is noted that the compound represented by Formula 4-1-4Ais not affected by the synthesis reaction for product 4-1-5, and thus the compound represented by Formula 4-1-4A is identical to the compound represented by Formula 4-1-5A. 45 mol% of the terminal groups in the entire product 4-1-5 were $CF_3$, while 55 mol% were CFzCHzOH.

Separation and purification by column chromatography gave 18 g of a compound having $CF_3$ at the both terminals (compound represented by Formula 4-1-5A), 9 g of a compound having CFzCHzOH at the both terminals (compound represented by Formula 4-1-5C), and 32 g of a compound having $CF_3$ and CFzCHzOH (compound represented by Formula 4-1-5B).

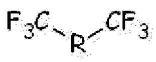
(4-1-5A)

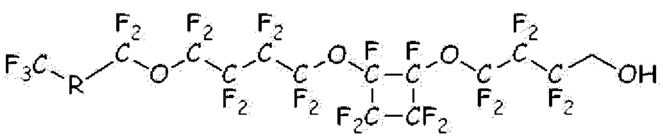
(4-1-5B)

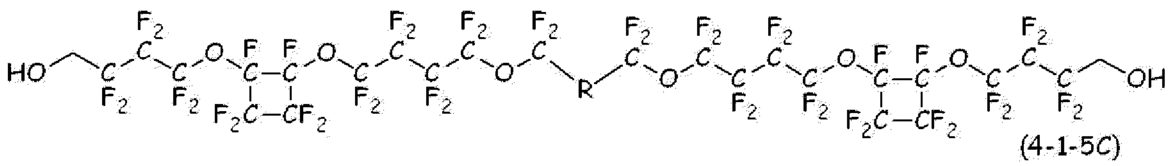
(4-1-5C)

R: 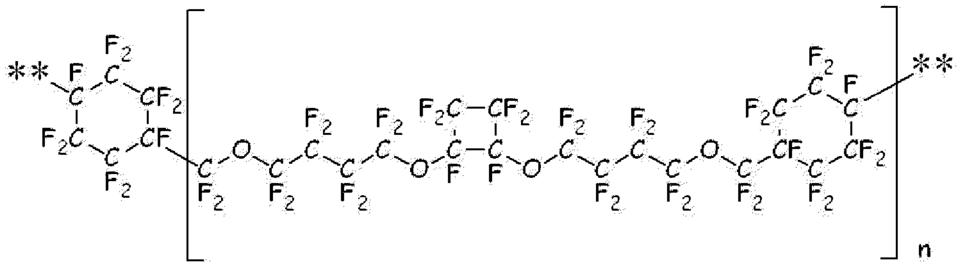

[Synthesis Example 5-1]

To a 500-mL hastelloy autoclave, 6.4 g of CsF powder was added. Then, 35.4 g of a compound represented by the following Formula L, that was prepared in advance from corresponding diol and $COF_2$, and 120 g of anhydrous Tetraglyme were added, which were cooled to -196°C under $N_2$ atmosphere for vacuum degassing. Thereafter, 50 g of the compound represented by Formula E was added, followed by reaction at 120°C for 42 hours under a pressure of 1.3 MPaG.

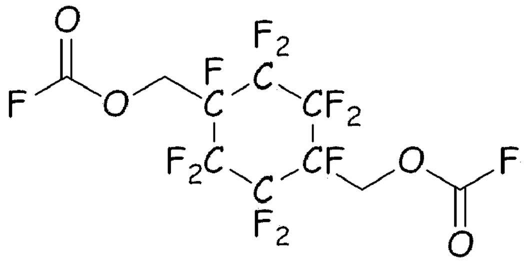 (L)

Thereafter, the reaction was continued at 170°C for 60 hours. After the reaction, the reaction was purged with low boiling-point gas, and 68 g of a produced polymer was collected.

The collected polymer was designated as a product 5-1-1. The product 5-1-1 contained compounds represented by the following Formulae 5-1-1A, 5-1-1B, and 5-1-1C. It is considered that the product 5-1-1 is produced via a mixture of compounds represented by the following Formulae 5-1-1A', 5-1-1B', and 5-1-1C'. It is noted that the compound represented by Formula 5-1-1C is identical to the compound represented by Formula 5-1-1C'.

The weight average molecular weight of the product 5-1-1 is 2,000. 45 mol% of the terminal groups in the entire product 5-1-1 were $CH_2F$, while 55 mol% were $CF_2COF$.

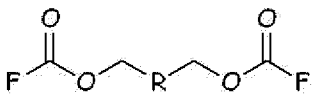 (5-1-1A')

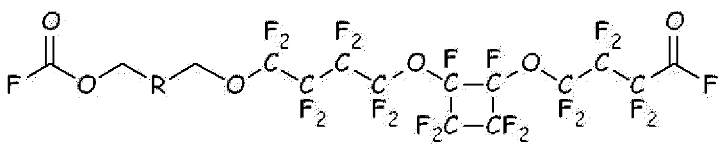 (5-1-1B')

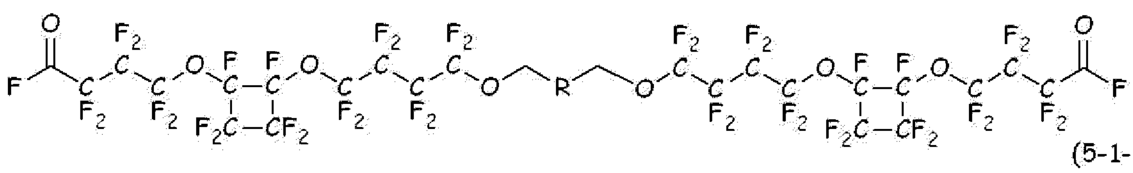

(5-1-1C')

R: 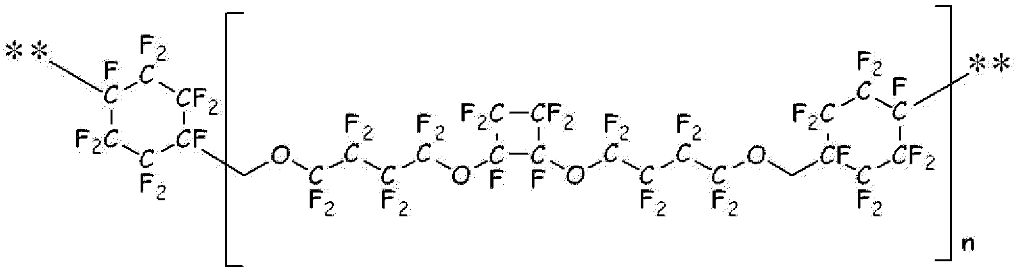

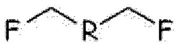 (5-1-1A)

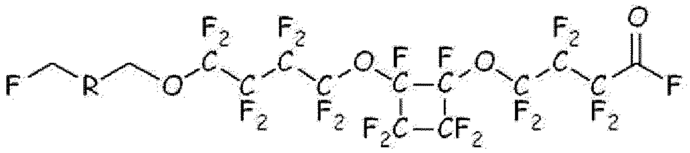 (5-1-1B)

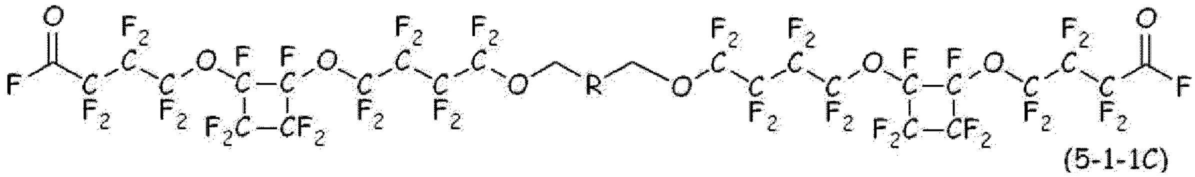

(5-1-1C)

R: 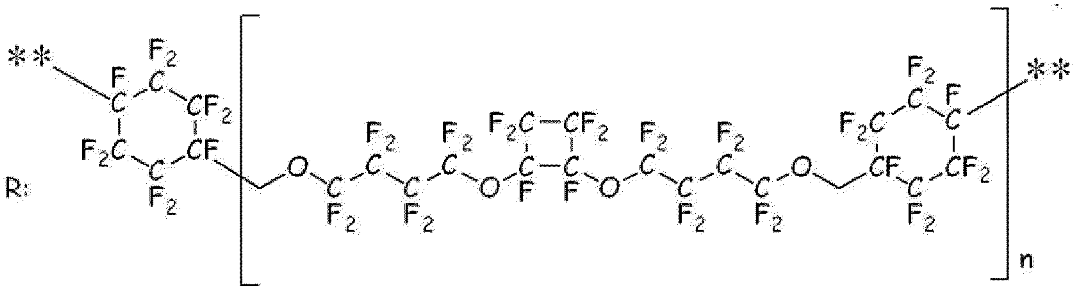

To a 500-mL PFA flask, 34 g of ethanol was added in advance, to which 68 g of the product 5-1-1 was added dropwise. During the dropwise addition, the dropping rate was adjusted so that the temperature did not exceed 10°C. Thereafter, the mixture was allowed to react at 40°C for 5 hours, then washed with water, and separated into two layers. Then the organic layer was concentrated, and 62 g of the organic layer was collected. This was designated as a product 5-1-2. The product 5-1-2 contained compounds represented by the following Formulae 5-1-2A, 5-1-2B, and 5-1-2C. It is noted that the compound represented by Formula 5-1-1A is not affected by the synthesis reaction for product 5-1-2, and thus the compound represented by Formula 5-1-2A is identical to the compound represented by Formula 5-1-1A.

45 mol% of the terminal groups in the entire product 5-1-2 were $CH_2F$, while 55 mol% were $CF_2COOCH_2CH_3$. The proportion of $CH_2F$ was the same as the proportion of $CH_2F$ for the product 5-1-1.

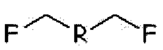 (5-1-2A)

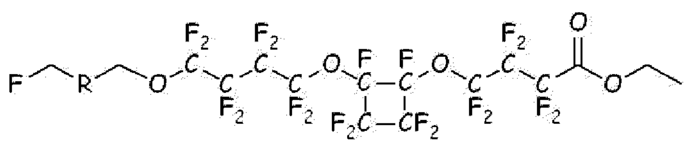 (5-1-2B)

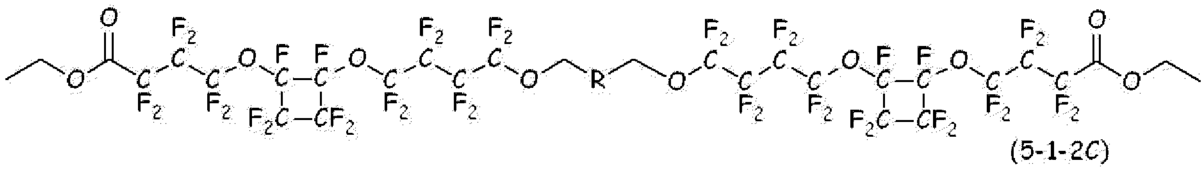

(5-1-2C)

R:

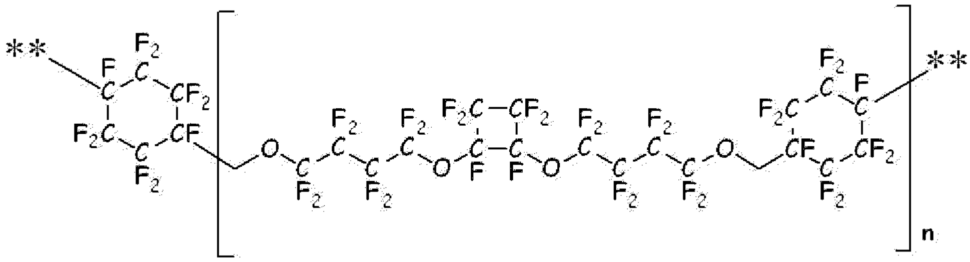

To a 500-mL nickel autoclave, 300 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 45 L/h for 1 hour. Then, 62 g of the product 5-1-2 was injected for 1 hour while blowing the 20 vol%- diluted fluorine gas at the same flow rate. Further, the 20 vol%- diluted fluorine gas was blown at the same rate for 1 hour, and then nitrogen gas was further blown for 1 hour. The reaction solution was collected from the autoclave and concentrated to obtain 65 g of a product 5-1-3.

The product 5-1-3 contained compounds represented by the following Formulae 5-1-3A, 5-1-3B, and 5-1-3C. 45 mol% of the terminal groups in the entire product 5-1-3 were $CF_3$, while 55 mol% were $CF_2COOCF_2CF_3$.

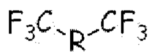 (5-1-3A)

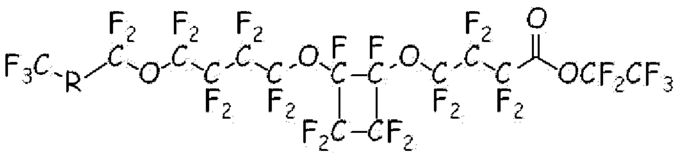 (5-1-3B)

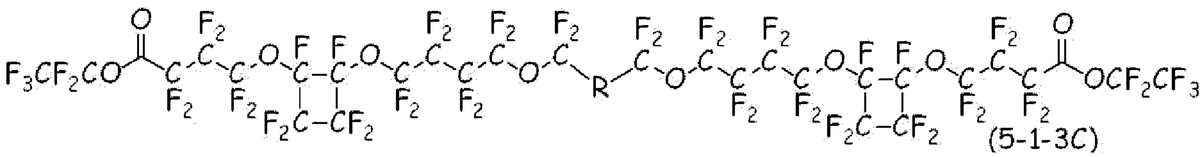

(5-1-3C)

R:

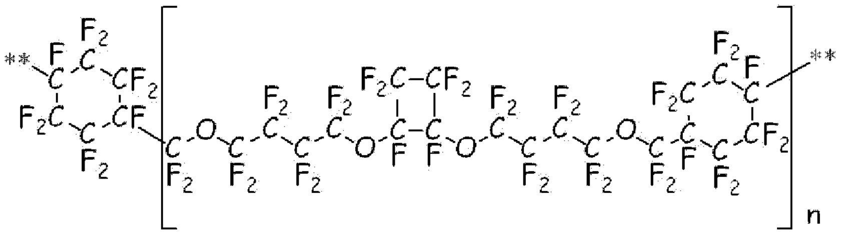

To a 500-mL PFA flask, 14 g of ethanol was added in advance, to which 65 g of the product 5-1-3 was added dropwise. During the dropwise addition, the dropping rate was adjusted so that the temperature did not exceed 10°C. Thereafter, the mixture was allowed to react at 40°C for 5 hours, then washed with water, and separated into two layers. Then the organic layer was concentrated, and 60 g of the organic layer was collected. This was designated as a product 5-1-4.

The product 5-1-4 contained compounds represented by the following Formulae 5-1-4A, 5-1-4B, and 5-1-4C. It is noted that the compound represented by Formula 5-1-3A is not affected by the synthesis reaction for product 5-1-4,

and thus the compound represented by Formula 5-1-4A is identical to the compound represented by Formula 5-1-3A. 45 mol% of the terminal groups in the entire product 5-1-4 were $CF_3$, while 55 mol% were $CF_2COOCH_2CH_3$.

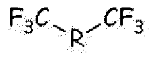 (5-1-4A)

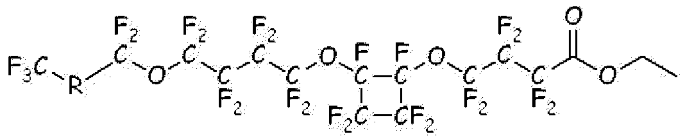 (5-1-4B)

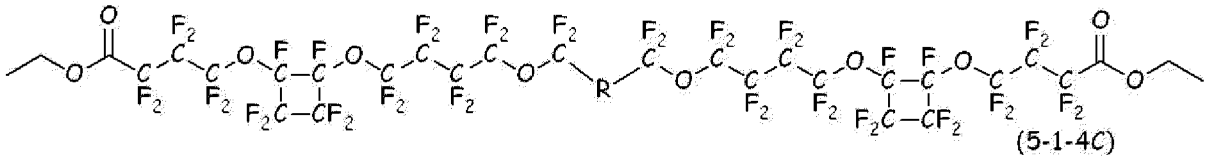
(5-1-4C)

R: 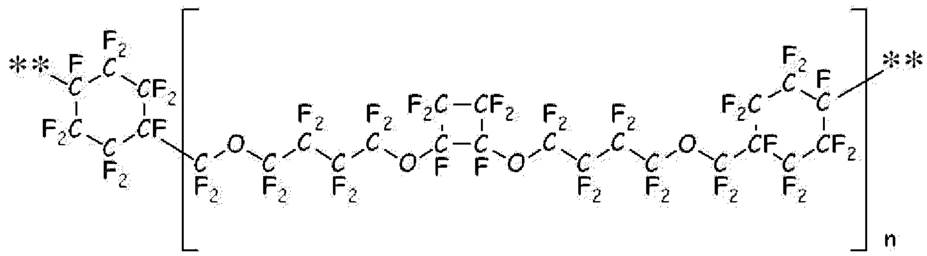

To a 500-mL three-necked flask, 2.2 g of $NaBH_4$ powder was added, and 60 g of AC-2000 was added. A solution obtained by mixing 60 g of the product 5-1-4, 3.6 g of methanol, and 60 g of AC-2000 was added dropwise at temperatures not exceeding 10°C. After the total volume was added dropwise, a solution obtained by mixing 3.6 g of methanol and 3.6 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 52 g of a product 5-1-5.

The product 5-1-5 contained compounds represented by the following Formulae 5-1-5A, 5-1-5B, and 5-1-5C. It is noted that the compound represented by Formula 5-1-4Ais not affected by the synthesis reaction for product 5-1-5, and thus the compound represented by Formula 5-1-4A is identical to the compound represented by Formula 5-1-5A. 45 mol% of the terminal groups in the entire product 5-1-5 were $CF_3$, while 55 mol% were CFzCHzOH.

Separation and purification by column chromatography gave 13 g of a compound having $CF_3$ at the both terminals (compound represented by Formula 5-1-5A), 31 g of a compound having CFzCHzOH at the both terminals (compound represented by Formula 5-1-5C), and 8 g of a compound having $CF_3$ and CFzCHzOH (compound represented by Formula 5-1-5B).

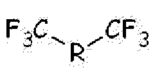 (5-1-5A)

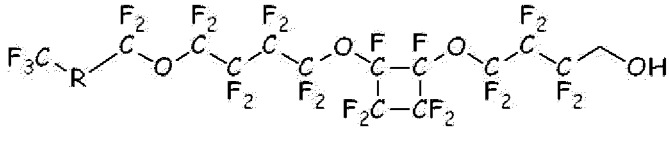 (5-1-5B)

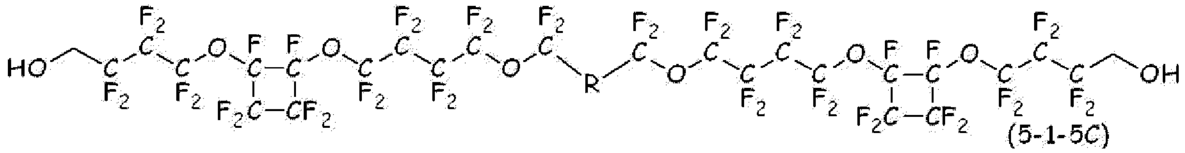

(5-1-5C)

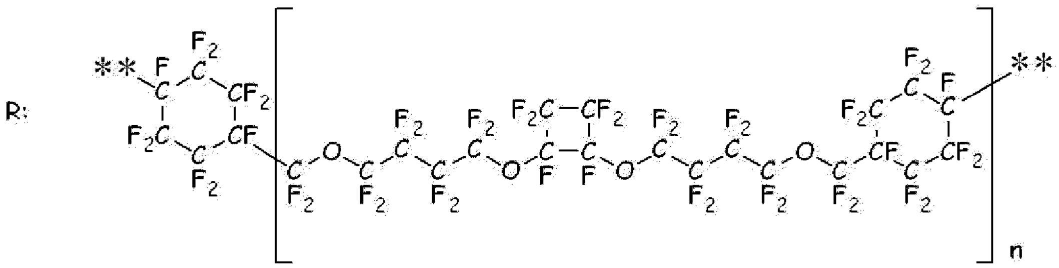

[Synthesis Example 6-1]

To a 1,000-mL hastelloy autoclave, 21.6 g of CsF powder was added. Then, 184.0 g of a compound represented by the following Formula M, that was prepared in advance from corresponding diol and $COF_2$, and 300 g of anhydrous Tetraglyme were added, which were cooled to -196°C under $N_2$ atmosphere for vacuum degassing. Thereafter, 50 g of the compound represented by the following Formula N was added, followed by reaction at 120°C for 42 hours under a pressure of 0.95 MPaG.

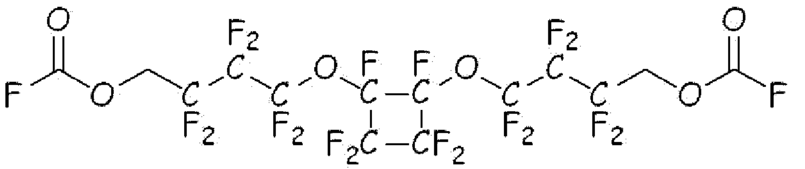

(M)

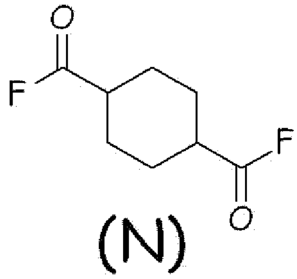

(N)

Thereafter, the reaction was continued at 170°C for 45 hours. After the reaction, the reaction was purged with low boiling-point gas, and 187 g of a produced polymer was collected.

The collected polymer was designated as a product 6-1-1. The product 6-1-1 contained compounds represented by the following Formulae 6-1-1A, 6-1-1B, and 6-1-1C. It is considered that the product 6-1-1 is produced via a mixture of compounds represented by the following Formulae 6-1-1A', 6-1-1B', and 6-1-1C'. It is noted that the compound represented by Formula 6-1-1C is identical to the compound represented by Formula 6-1-1C'.

The weight average molecular weight of the product 6-1-1 is 1,500. 43 mol% of the terminal groups in the entire product 6-1-1 were $CH_2F$, while 57 mol% were >CHCOF.

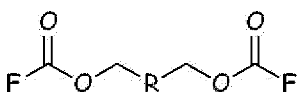

(6-1-1A')

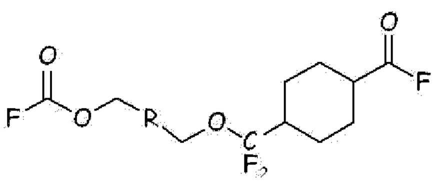

(6-1-1B')

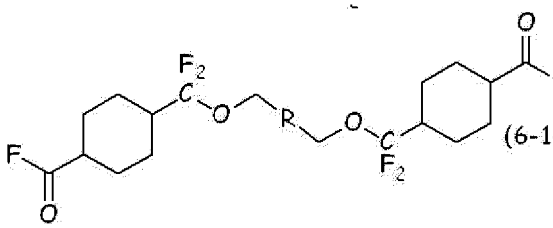

(6-1-1C')

R:

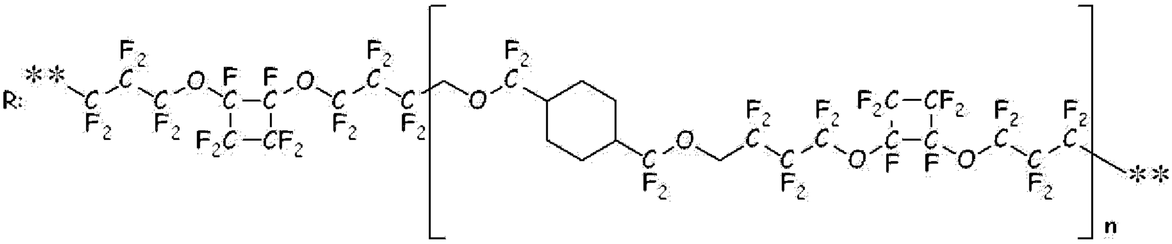

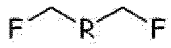

(6-1-1A)

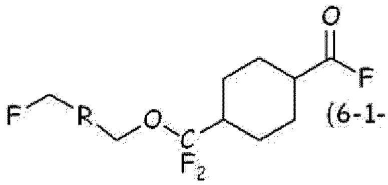

(6-1-1B)

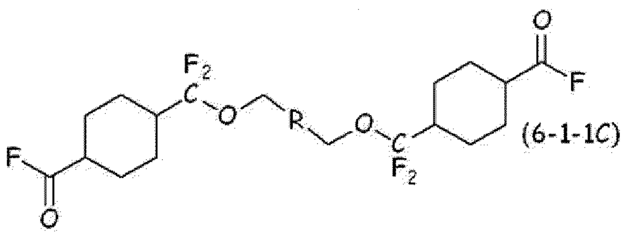

(6-1-1C)

R:

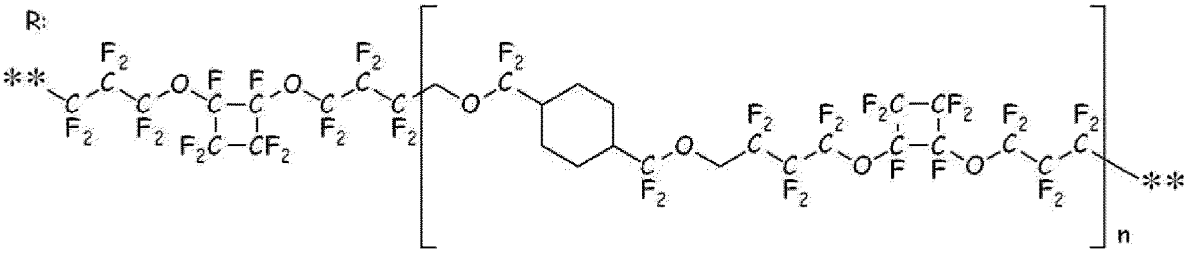

To a 500-mL PFA flask, 94 g of ethanol was added in advance, to which 187 g of the product 6-1-1 was added dropwise. During the dropwise addition, the dropping rate was adjusted so that the temperature did not exceed 10°C. Thereafter, the mixture was allowed to react at 40°C for 5 hours, then washed with water, and separated into two layers. Then the organic layer was concentrated, and 180 g of the organic layer was collected. This was designated as a product 6-1-2.

The product 6-1-2 contained compounds represented by the following Formulae 6-1-2A, 6-1-2B, and 6-1-2C. It is noted that the compound represented by Formula 6-1-1A is not affected by the synthesis reaction for product 6-1-2, and thus the compound represented by Formula 6-1-2A is identical to the compound represented by Formula 6-1-1A.

43 mol% of the terminal groups in the entire product 6-1-2 were $CH_2F$, while 57 mol% were >$CHCOOCH_2CH_3$. The proportion of $CH_2F$ was the same as the proportion of $CH_2F$ for the product 6-1-1.

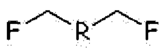 (6-1-2A)

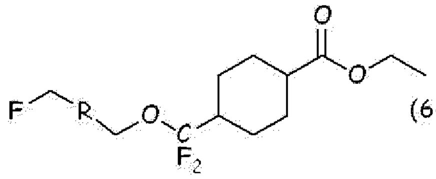 (6-1-2B)

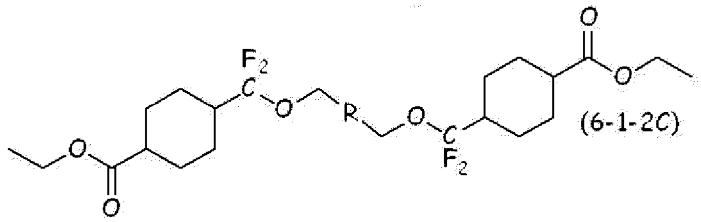 (6-1-2C)

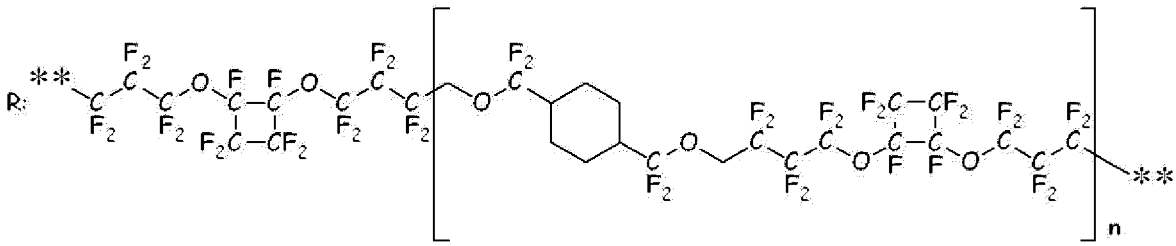

To a 500-mL nickel autoclave, 300 g of CFE-419 was added and stirred while the temperature was kept at 20°C. At the gas outlet of the autoclave was placed a condenser kept at -20°C. Nitrogen gas was blown into the autoclave for 1.0 hours, followed by diluted fluorine gas, which has a fluorine gas content of 20 vol% and diluted with nitrogen gas, blown at a blowing rate of 92 L/h for 1 hour. Then, 187 g of the product 6-1-2 was injected for 5 hours while blowing the 20 vol%- diluted fluorine gas at the same flow rate. Further, the 20 vol%- diluted fluorine gas was blown at the same rate for 1 hour, and then nitrogen gas was further blown for 1 hour. The reaction solution was collected from the autoclave and concentrated to obtain 229 g of a product 6-1-3.

The product 6-1-3 contained compounds represented by the following Formulae 6-1-3A, 6-1-3B, and 6-1-3C. 43 mol% of the terminal groups in the entire product 6-1-3 were $CF_3$, while 57 mol% were >$CFCOOCF_2CF_3$.

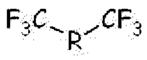 (6-1-3A)

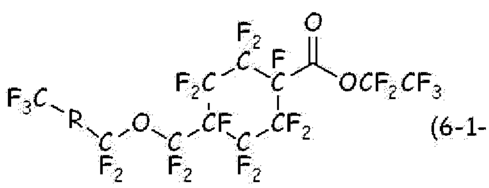 (6-1-3B)

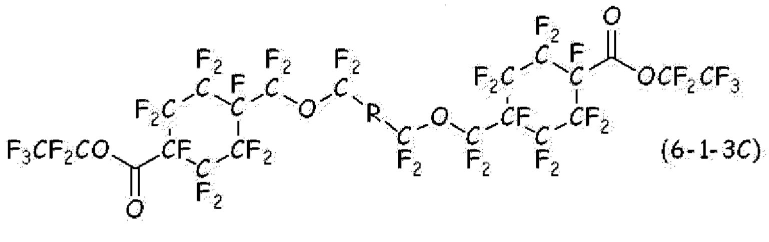 (6-1-3C)

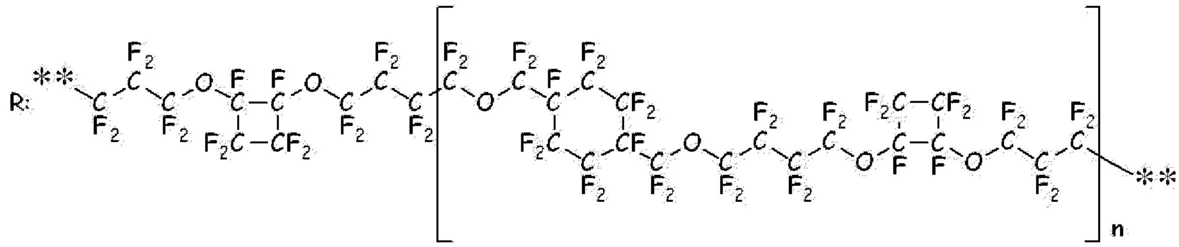

To a 500-mL PFA flask, 53 g of ethanol was added in advance, to which 229 g of the product 6-1-3 was added dropwise. During the dropwise addition, the dropping rate was adjusted so that the temperature did not exceed 10°C. Thereafter, the mixture was allowed to react at 40°C for 5 hours, then washed with water, and separated into two layers. Then the organic layer was concentrated, and 210 g of the organic layer was collected. This was designated as a product 6-1-4.

The product 6-1-4 contained compounds represented by the following Formulae 6-1-4A, 6-1-4B, and 6-1-4C. It is noted that the compound represented by Formula 6-1-3Ais not affected by the synthesis reaction for product 6-1-4, and thus the compound represented by Formula 6-1-4A is identical to the compound represented by Formula 6-1-3A. 43 mol% of the terminal groups in the entire product 6-1-4 were $CF_3$, while 57 mol% were

$>CFCOOCH_2CH_3$.

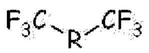 (6-1-4A)

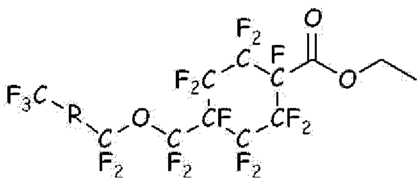 (6-1-4B)

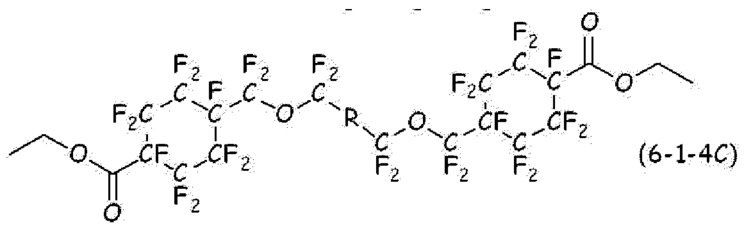 (6-1-4C)

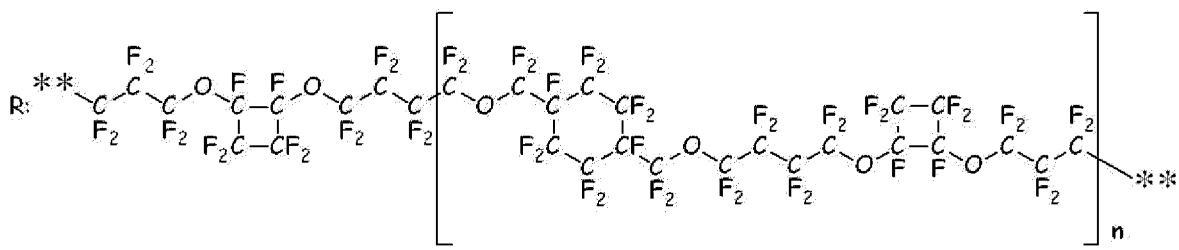

To a 500-mL three-necked flask, 7.9 g of $NaBH_4$ powder was added, and 210 g of AC-2000 was added. A solution obtained by mixing 210 g of the product 6-1-4, 13.5 g of methanol, and 210 g of AC-2000 was added dropwise at temperatures not exceeding 10°C. After the total volume was added dropwise, a solution obtained by mixing 13.5 g of methanol and 210 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 198 g of a product 6-1-5.

The product 6-1-5 contained compounds represented by the following Formulae 6-1-5A, 6-1-5B, and 6-1-5C. It is noted that the compound represented by Formula 6-1-4Ais not affected by the synthesis reaction for product 6-1-5, and thus the compound represented by Formula 6-1-4A is identical to the compound represented by Formula 6-1-5A. 43 mol% of the terminal groups in the entire product 6-1-5 were $CF_3$, while 57 mol% were >CFCHzOH.

Separation and purification by column chromatography gave 37 g of a compound having $CF_3$ at the both terminals (compound represented by Formula 6-1-5A), 127 g of a compound having >CFCHzOH at the both terminals (compound represented by Formula 6-1-5C), and 33 g of a compound having $CF_3$ and >CFCHzOH (compound represented by Formula 6-1-5B).

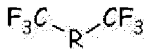
(6-1-5A)

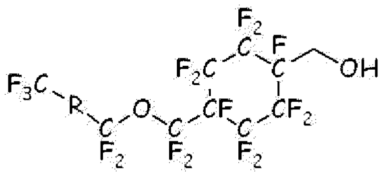
(6-1-5B)

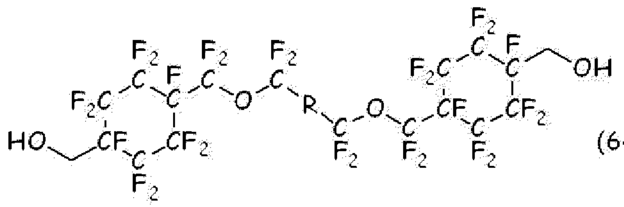
(6-1-5C)

R:
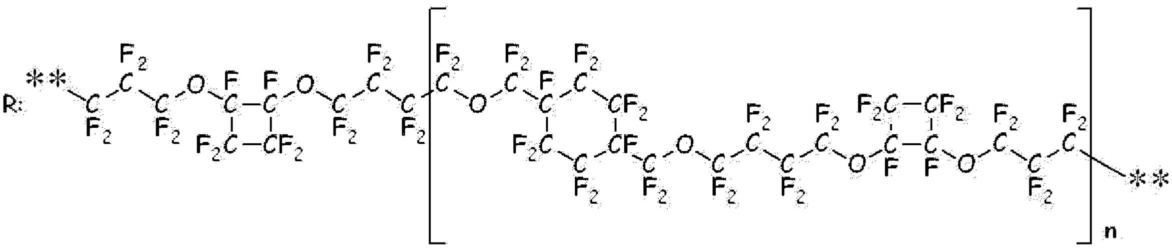

[Synthesis Example 7]

A product 7-1 as described below was synthesized according to a method described in [0129] to [0133] in WO2019/243404. The weight average molecular weight Mw was 1,400.

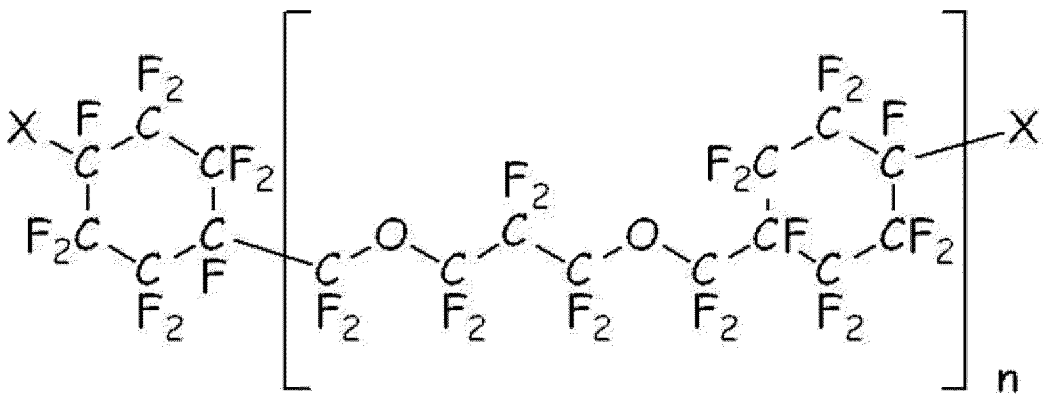
(7-1)

x = $-CF_3$, $-COOCH_2CH_3$

To a 500-mL three-necked flask, 3.2 g of $NaBH_4$ powder was added, and 60 g of AC-2000 was added. A solution obtained by mixing 60 g of the product 7-1, 5.5 g of methanol, and 60 g of AC-2000 was added dropwise at temperatures not exceeding 10°C. After the total volume was added dropwise, a solution obtained by mixing 5.5 g of methanol and 60 g of AC-2000 was further added dropwise. Thereafter, stirring of the mixture was continued at 20°C. After 12 hours, hydrochloric acid was added dropwise until the aqueous solution became acidic, and the resulting product was separated into two layers, from which the organic layer was collected. Thereafter, the organic layer was washed once with water and once with a saturated salt water, and then concentrated to obtain 52 g of a product 7-2.

44 mol% of the terminal groups in the entire product 7-2 were $CF_3$, while 56 mol% were CHzOH.

Separation and purification by column chromatography gave 12 g of a compound having $CF_3$ at the both terminals (compound 7-2A), 24 g of a compound having CHzOH at the both terminals (compound 7-2B), and 16 g of a compound having $CF_3$ and CHzOH. The weight average molecular weights Mw of the compounds were 1,400.

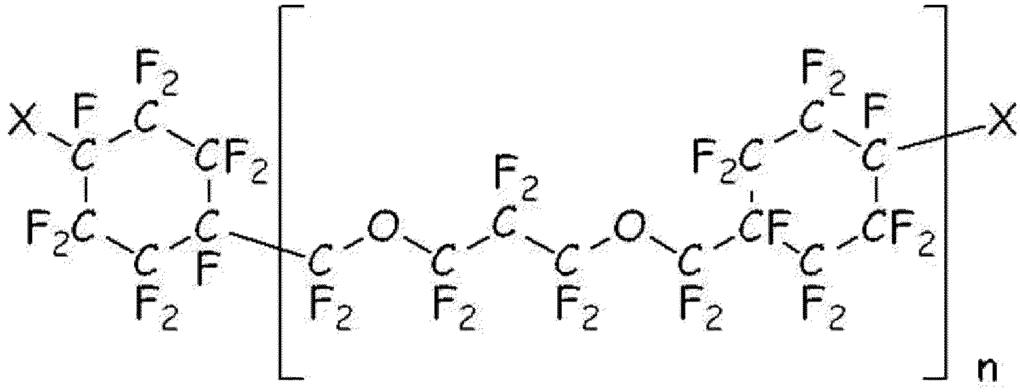

(7-2)

x = $-CF_3$, $-CH_2OH$

[Evaluation]

2 g of each of the compounds obtained in Synthesis Examples was added to a glass flask, followed by further addition of 2 g of aluminum chloride and heating at 200°C for 100 hours. The residual amount of the compound after being heated for 100 hours was measured, and the residual proportion was calculated. The obtained results are shown in Table 1.

It is found that the compounds obtained in Synthesis Examples 1-1 to 6-1 have improved chemical resistance as compared with the compound obtained in Synthesis Example 7.

Table 1

| Compounds | Mw | % residual |
|---|---|---|
| 1-1-5C | 2,800 | 72 |
| 1-1-5B | 2,800 | 59 |
| 1-1-5A | 2,800 | 50 |
| 1-2-5A | 3,000 | 52 |
| 1-3-4A | 3,400 | 58 |
| 1-4-5A | 2,300 | 55 |
| 2-1-5A | 3,800 | 51 |
| 3-1-5A | 3,000 | 50 |
| 3-2-5A | 2,300 | 53 |
| 4-1-5A | 2,000 | 68 |
| 4-1-5B | 2,000 | 61 |
| 4-1-5C | 2,000 | 54 |

(continued)

| Compounds | Mw | % residual |
|---|---|---|
| 5-1-5A | 2,000 | 66 |
| 5-1-5B | 2,000 | 59 |
| 5-1-5C | 2,000 | 53 |
| 6-1-5A | 2,000 | 68 |
| 6-1-5B | 2,000 | 62 |
| 6-1-5C | 2,000 | 54 |
| 7-2A | 1,400 | 34 |
| 7-2B | 1,400 | 31 |

The disclosures of JP-A 2020-217940 filed on December 25, 2020 are incorporated herein by reference in its entirety.

All documents, patent applications, and technical standards described herein are incorporated herein by reference to the same extent as if the individual documents, patent applications, and technical standards were specifically and individually incorporated by reference.

## Claims

1. A fluorine-containing polyether compound comprising a structural unit represented by the following Formula (1) or a structural unit represented by the following Formula (2):

$$[-CF_2-CHR^1-O-R^2-O-CHR^1-CF_2-O-R^3-O-]... \qquad (1)$$

$$[-R^5-O-R^4-O-R^5-O-R^6-O-]... \qquad (2)$$

wherein, in Formula (1),

each $R^1$ independently represents a fluorine atom, a hydrogen atom, or a monovalent hydrocarbon group having from 1 to 3 carbon atoms in which a hydrogen atom may be replaced by a fluorine atom, and
each of $R^2$ and $R^3$ independently represents a divalent hydrocarbon group having from 3 to 20 carbon atoms which comprises a ring structure and may comprise an ether bond and in which a hydrogen atom may be replaced by a fluorine atom, provided that at least one of $R^2$ or $R^3$ represents a divalent hydrocarbon group having from 3 to 20 carbon atoms which comprises a ring structure and may comprise an ether bond and in which a hydrogen atom is replaced by a fluorine atom; and
wherein, in Formula (2),
each of $R^4$ and $R^6$ independently represents a divalent hydrocarbon group having from 3 to 20 carbon atoms which comprises a ring structure and in which a hydrogen atom may be replaced by a fluorine atom, provided that at least one of $R^4$ or $R^6$ represents a divalent hydrocarbon group having from 3 to 20 carbon atoms which comprises a ring structure and in which a hydrogen atom is replaced by a fluorine atom, and $R^4$ and $R^6$ also have different structures from each other, and
each $R^5$ independently represents an alkylene group having from 1 to 16 carbon atoms in which a hydrogen atom may be replaced by a fluorine atom.

2. The fluorine-containing polyether compound according to claim 1, wherein one of $R^2$ or $R^3$ in Formula (1) comprises an aliphatic ring, and another of $R^2$ or $R^3$ comprises an aromatic ring.

3. The fluorine-containing polyether compound according to claim 1 or 2, wherein each of $R^2$ and $R^3$ in Formula (1) comprises a ring structure, and a number of ring members in the ring structure that $R^2$ comprises differs from a number of ring members in the ring structure that $R^3$ comprises.

4. The fluorine-containing polyether compound according to any one of claims 1 to 3, wherein a number of ring structures

in one of $R^2$ or $R^3$ in Formula (1) differs from a number of ring structures in another of $R^2$ or $R^3$.

**5.** The fluorine-containing polyether compound according to any one of claims 1 to 4, wherein $R^3$ in Formula (1) is a group represented by $-CH_2R^{3A}CH_2-$, and wherein $R^{3A}$ represents a group having a structure obtainable by removing two methylene groups that form portions bonding to oxygen atoms, from the divalent hydrocarbon group represented by $R^3$ in Formula (1).

**6.** The fluorine-containing polyether compound according to any one of claims 1 to 5, wherein each of $R^4$ and $R^6$ in Formula (2) comprises a ring structure, and a number of ring members in the ring structure that $R^4$ comprises differs from a number of ring members in the ring structure that $R^6$ comprises.

**7.** A fluorine-containing polyether compound comprising a structural unit represented by the following Formula (1') or a structural unit represented by the following Formula (2'):

$$[-CF_2-CFR^{F1}-O-R^{F2}-O-CFR^{F1}-CF_2-O-R^{F3}-O-]... \qquad (1')$$

$$[-R^{F5}-O-R^{F4}-O-R^{F5}-O-R^{F6}-O-]... \qquad (2')$$

wherein, in Formula (1'),

each $R^{F1}$ independently represents: a fluorine atom; or a monovalent perfluorohydrocarbon group having from 1 to 3 carbon atoms, and
each of $R^{F2}$ and $R^{F3}$ independently represents a divalent perfluorohydrocarbon group having from 3 to 20 carbon atoms which comprises a ring structure and may comprise an ether bond; and
wherein, in Formula (2'),
each of $R^{F4}$ and $R^{F6}$ independently represents a divalent perfluorohydrocarbon group having from 3 to 20 carbon atoms which comprises a ring structure, provided that $R^{F4}$ and $R^{F6}$ have different structures from each other, and each $R^{F5}$ independently represents a perfluoroalkylene group having from 1 to 16 carbon atoms.

## INTERNATIONAL SEARCH REPORT

International application No.
**PCT/JP2021/046847**

**A. CLASSIFICATION OF SUBJECT MATTER**

***C07C 43/12***(2006.01)i; ***C08G 65/34***(2006.01)i
FI: C08G65/34; C07C43/12

According to International Patent Classification (IPC) or to both national classification and IPC

**B. FIELDS SEARCHED**

Minimum documentation searched (classification system followed by classification symbols)

C07C41/00-43/32; C08G65/00-65/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2008-260814 A (FUJIFILM CORP) 30 October 2008 (2008-10-30) claims, paragraphs [0003], [0013]-[0034], examples | 1-7 |
| X<br>A | WO 2020/162371 A1 (AGC INC.) 13 August 2020 (2020-08-13) claims, paragraph [0006], examples (example 4) | 7<br>1-6 |
| A | WO 02/04397 A1 (ASAHI GLASS CO., LTD.) 17 January 2002 (2002-01-17) claims | 1-7 |
| E, A | WO 2022/004436 A1 (AGC INC.) 06 January 2022 (2022-01-06) claims, examples | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 February 2022** | **15 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/046847**

| Patent document cited in search report | Publication date (day/month/year) | Patent family member(s) | Publication date (day/month/year) |
|---|---|---|---|
| JP 2008-260814 A | 30 October 2008 | US 2008/0255337 A1<br>claims, paragraphs [0018]-[0030], examples | |
| WO 2020/162371 A1 | 13 August 2020 | (Family: none) | |
| WO 02/04397 A1 | 17 January 2002 | US 2003/0135067 A1<br>claims<br>EP 1300386 A1<br>CN 1461293 A | |
| WO 2022/004436 A1 | 06 January 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019243403 A
- WO 2019243404 A
- JP 2001208736 A
- JP 2020217940 A